(19) Europäisches Patentamt
European Patent Office
Office européen des brevets

(11) **EP 4 308 886 B1**

(12) **EUROPÄISCHE PATENTSCHRIFT**

(45) Veröffentlichungstag und Bekanntmachung des Hinweises auf die Patenterteilung:
**30.07.2025 Patentblatt 2025/31**

(21) Anmeldenummer: **22733976.9**

(22) Anmeldetag: **21.06.2022**

(51) Internationale Patentklassifikation (IPC):
**G01F 1/64** *(2006.01)*   **G01F 1/74** *(2006.01)*

(52) Gemeinsame Patentklassifikation (CPC):
**G01F 1/64; G01F 1/74**

(86) Internationale Anmeldenummer:
**PCT/EP2022/066803**

(87) Internationale Veröffentlichungsnummer:
**WO 2022/268762 (29.12.2022 Gazette 2022/52)**

(54) **GITTERSENSOR, GITTERSENSORSYSTEM, VERFAHREN UND COMPUTERPROGRAMMPRODUKT ZUM KORRIGIEREN EINES STÖREINFLUSSES VON EIN ODER MEHREREN FLUIDEN**

GRID SENSOR, GRID SENSOR SYSTEM, METHOD AND COMPUTER PROGRAM PRODUCT FOR CORRECTION OF AN INTERFERENCE BY ONE OR MORE FLUIDS

CAPTEUR DE GRILLE, SYSTÈME DE CAPTEUR DE GRILLE, PROCÉDÉ ET PRODUIT PROGRAMME INFORMATIQUE DE CORRECTION D'UNE INTERFERENCE PAR UN OU PLUSIEURS FLUIDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.06.2021 DE 102021116540**

(43) Veröffentlichungstag der Anmeldung:
**24.01.2024 Patentblatt 2024/04**

(73) Patentinhaber: **Helmholtz-Zentrum Dresden - Rossendorf e.V.**
**01328 Dresden (DE)**

(72) Erfinder:
• **SCHLEICHER, Eckhard**
**01328 Dresden (DE)**
• **DE ASSIS DIAS, Felipe**
**01067 Dresden (DE)**
• **LÖSCHAU, Martin**
**01454 Radeberg / OT Rossendorf (DE)**
• **DA SILVA, Marco Jose**
**4040 Linz (AT)**

(74) Vertreter: **Viering, Jentschura & Partner mbB Patent- und Rechtsanwälte**
**Am Brauhaus 8**
**01099 Dresden (DE)**

(56) Entgegenhaltungen:
EP-A1- 3 309 522          WO-A1-2021/053177
CN-A- 105 021 658         CN-A- 108 845 005
CN-A- 111 189 881         CN-A- 112 710 703
DE-A1- 102007 019 926     DE-A1- 102013 203 437
DE-B3- 102015 117 084     JP-A- 2017 150 995

• **H-M PRASSER A BÖTTGER ET AL: "A new electrode-mesh tomograph for gas-liquid flows", FLOW MEASUREMENT AND INSTRUMENTATION, BUTTERWORTH-HEINEMANN, OXFORD, GB, vol. 9, 1 January 1998 (1998-01-01), pages 111 - 119, XP002389213, ISSN: 0955-5986**
• **PRASSER H-M ET AL: "Bubble size measurement using wire-mesh sensors", FLOW MEASUREMENT AND INSTRUMENTATION, BUTTERWORTH-HEINEMANN, OXFORD, GB, vol. 12, no. 4, 1 August 2001 (2001-08-01), pages 299 - 312, XP002491654, ISSN: 0955-5986, DOI: 10.1016/S0955-5986(00)00046-7**

**Beschreibung**

Verschiedene Ausführungsformen betreffen einen Gittersensor, ein Gittersensorsystem, ein Verfahren und ein Computerprogrammprodukt, die jeweils geeignet sind zum Korrigieren eines Störeinflusses von ein oder mehreren Fluiden auf den Gittersensor, das Gittersensorsystem, Messdaten einer Auswertevorrichtung und Messdaten des Computerprogrammprodukts.

Im Allgemeinen können Gittersensoren verwendet werden, um mehrere Anteile (z.B. Phasenanteile und/oder Fluidanteile) in einem Fluidstrom zu untersuchen, wobei sich die mehreren Anteile des Fluidstroms in zumindest einer elektrischen Eigenschaft unterscheiden.

Beispielsweise kann zu einer Untersuchung des Fluidstroms ein kapazitiver Gittersensor verwendet werden. Der kapazitive Gittersensor kann bei kleinen Sensorflächen (z.B. weniger als 10 cm$^2$) sowie bei einem Fluidstrom, der nur Anteile mit geringen Leitfähigkeiten aufweist (z.B. in Deionat), verwendet werden. Beispielsweise können mittels Sendedrähten und Empfangsdrähten eines Gittersensors kapazitive Verschiebeströme gemessen werden. Durch eine zusätzliche elektrisch-nichtisolierte Drahtebene können alle Anteile des leitfähigen Fluids mit einem Massepotential verbunden werden, wodurch diese Anteile signalseitig auf das Massepotential (z.B. 0 V) gesetzt werden können.

Bereits bei Fluiden, die zumindest einen leitfähigen Anteil (z.B. einen leitfähigen Phasenanteil und/oder einen leitfähigen Flüssigkeitsanteil) aufweisen, der eine höheren Leitfähigkeit als die eines Deionats (z.B. Leitungswasser) aufweist können herkömmliche Gittersensoren ungeeignet sein. Beispielsweise können durch die leitfähigen Anteile Nichtlinearitäten auftreten, durch die ein Signalverlust entlang der Empfängerdrähte entstehen kann, z.B. infolge einer Energiedissipation. Die Signalverluste können proportional steigen mit der Zusammensetzung des Fluidstroms (z.B. der Leitfähigkeit des leitfähigen Anteils des Fluidstroms, und/oder der gesamten Leitfähigkeit des Fluidstroms) und/oder mit einer Beschaffenheit der Sendedrähte und Empfangsdrähte (z.B. mit einer Länge der Drähte, einer Anzahl der Drähte, einer Drahtdichte, und/oder einer Anzahl von Kreuzungspunkten der Drähte). Die Verluste können abhängig sein von der jeweiligen Benetzung von Kreuzungspunkten der Sendedrähte und Empfangsdrähte mit dem leitfähigen Anteil des Fluidstroms. Da sich die Benetzung der Kreuzungspunkte stetig ändern kann, können sich auch die Verluste stetig ändern. Im Allgemeinen können die Verluste zu Nichtlinearitäten und einer Unterschätzung der Messwerte an allen Empfangsdrähten führen, die mit dem leitfähigen Fluid in Kontakt stehen.

Auch bei einer höheren Anzahl von Sendedrähten und/oder Empfangsdrähten (z.B. jeweils mehr als 10), und/oder größeren Geometrien (z.B. einer Sensorfläche von mehr als 20 cm$^2$) können herkömmliche Gittersensoren die Phasenanteile bzw. die Flüssigkeitsanteile nur ungenau oder nicht quantifizieren. Beispielsweise kann eine genaue Kalibrierung von allen Sensorelementen insbesondere bei der höheren Anzahl von Sendedrähten und/oder Empfangsdrähten nur sehr umständlich realisiert werden. Herkömmliche Gittersensoren können ungeeignet sein, um Phasenanteile bzw. Flüssigkeitsanteile zu quantifizieren, solange die leitfähige Phase die kontinuierliche Phase ist.

DE 10 2013 203 437 beschreibt einen Gittersensor zur Messung der Phasenverteilung eines mehrphasigen Stoffgemisches mit gasförmigen und flüssigen Komponenten unter Vorhandensein einer hochleitfähigen Phase (wie Salzwasser oder Flüssigmetall).

WO 2021 053 177 beschreibt ein Mehrphasen-Messsystem für ein mehrphasiges Fluid aufweisend eine Referenzwert-Messanordnung und eine Mehrphasen-Messeinrichtung. Die Referenzwert-Messanordnung weist mindestens eine Kapillare und eine Kapillaren-Messeinrichtung auf. Innere Querschnittsfläche und Länge der Kapillare sind so bemessen, dass bei Durchströmung der Kapillare Phasen des mehrphasigen Fluids in Durchströmungsrichtung separieren. Die Kapillaren-Messeinrichtung ist zur Bestimmung mindestens einer physikalischen Eigenschaft mindestens einer der durch die Kapillare fließenden Phasen eingerichtet.

Gemäß verschiedener Aspekte wird eine Vorrichtung und ein Verfahren bereitgestellt, die eine Messung eines Fluidstroms, der mehrere Phasenanteile und/oder mehrere Fluidanteile aufweisen kann, ermöglichen. Zumindest ein Phasenanteil der mehreren Phasenanteile bzw. ein Fluidanteil der mehreren Fluidanteile kann (hoch)leitfähig sein.

Gemäß verschiedener Aspekte wird eine Vorrichtung und ein Verfahren bereitgestellt, das Verluste und Nichtlinearitäten an Sendeelektroden und/oder Empfangselektroden aufgrund einer Benetzung mit einem leitfähigen Anteil des Fluidstroms kompensieren kann.

Gemäß verschiedener Aspekte wird ein Verfahren bereitgestellt, das die Verluste und Nichtlinearitäten inhärent quantifizieren kann.

Gemäß verschiedener Aspekte wird ein Verfahren bereitgestellt, das aus ein oder mehreren gemessenen (z.B. verlustbehafteten) Werten der einzelnen Kreuzungspunkte von den Sendeelektroden und den Empfangselektroden im Fluidstrom und ein oder mehreren Referenzwerten ein oder mehrere korrigierte bzw. verlustbefreite Messwerte bestimmt. Die ein oder mehreren korrigierten bzw. verlustbefreiten Messwerte können den realen Messwerten an den Kreuzungspunkten entsprechen.

Gemäß verschiedener Aspekte werden eine Vorrichtung und ein Verfahren bereitgestellt, mit denen es ermöglicht wird einen kapazitiven Gittersensor auch für einen Fluidstrom einzusetzen, der zumindest einen hochleitfähigen Phasenanteil bzw. Fluidanteil aufweist.

Gemäß verschiedener Aspekte wird eine Vorrichtung bereitgestellt, die verwendet werden kann, die Energieverluste in Empfangsdrähten eines Gittersensors zu korrigieren. Beispielsweise kann dadurch eine Messung von leitfähigen und/oder hochleitfähigen Flüssigkeiten ermöglicht werden.

Gemäß verschiedener Aspekte wird eine Vorrichtung bereitgestellt, die verwendet werden kann zum Messen von mehrphasigen Gemischen, bei denen mindestens eine der Phasen leitfähig und/oder hochleitfähig ist.

Gemäß verschiedener Aspekte wird ein Verfahren bereitgestellt, das Abschätzung und Kompensation von Energieverlusten in Gittersensoren ermöglicht, wenn der Gittersensor zur Messung von leitfähigen und/oder hochleitfähigen Fluiden (z.B. Gasen und/oder Flüssigkeiten) verwendet wird.

Gemäß verschiedener Aspekte wird ein Verfahren bereitgestellt, das die Korrektur von Nichtlinearitäten bei Messungen ermöglicht. Somit kann beispielsweise die Genauigkeit eines Gittersensors bei der Ermittlung von durchflussabhängigen Parametern erhöht werden, z.B. bei der Ermittlung eines Fraktionsanteils (z.B. einem prozentualen Anteil einer Phase und/oder einer Flüssigkeit am gesamten Fluidstrom) und/oder einer jeweiligen Fließgeschwindigkeit von ein oder mehreren Phasen des Fluidstroms, und/oder einer Phasengeschwindigkeit und/oder von ein oder mehreren Konzentrationsverhältnissen (z.B. von voneinander verschiedenen Anteilen innerhalb des Fluids, z.B. im Rahmen einer sogenannten Tracermessung).

Gemäß verschiedenen Aspekten kann ein Gittersensor bereitgestellt werden aufweisend: einen Fluidführungsbereich; mehrere Gittersensoreinheiten, wobei jede der mehreren Gittersensoreinheiten aufweist: eine Gruppe von Sensorelementen eingerichtet zum Erzeugen von Messsignalen, welche ein oder mehrere Eigenschaften eines in dem Fluidführungsbereich geführten Fluids repräsentieren; eine Elektrode, wobei die Sensorelemente der Gruppe von Sensorelementen mit der Elektrode verbunden sind zum Betreiben der Sensorelemente der Gruppe von Sensorelementen; ein Referenzelement, welches der Elektrode zugeordnet ist, mit der Elektrode verbunden ist, und eingerichtet ist, ein Referenzsignal, welches einen Störeinfluss des in dem Fluidführungsbereich geführten Fluids auf eine elektrische Charakteristik der Elektrode repräsentiert, bereitzustellen.

Somit wird anschaulich in verschiedenen Aspekten eine Vorrichtung bereitgestellt, die Verluste und Nichtlinearitäten inhärent quantifizieren kann. Durch das Referenzelement, das nicht durch den Fluidstrom beeinflusst wird, kann ein Referenzwert bereitgestellt werden, der ein Signal einer Elektrode repräsentieren kann. Da sowohl eine Geometrie als auch die Materialien nicht verändert werden, können messbare, eintretende Änderungen des Referenzwerts auf eine Veränderung des Signals (z.B. einem Signalverlust oder einem Signalgewinn) entlang einer jeweiligen Elektrode (z.B. Sendeelektrode und/oder Empfangselektrode) zurückgeführt werden.

Gemäß verschiedener Aspekte kann die Referenzelektrode in einer Basisplatte des Gittersensors angeordnet sein. Beispielsweise kann die Referenzelektrode einen Referenzwert (z.B. eine Kapazität, eine Temperatur, eine Induktivität) mittels eines Trägermaterials (z.B. einer Leiterplatte) ermitteln (z.B. Messen).

Gemäß verschiedener Aspekte kann ein Gittersensorsystem bereitgestellt werden, das aufweist: einen Gittersensor gemäß einem der Patentansprüche 1 bis 8, eine Ermittlungsvorrichtung, die eingerichtet ist zum Ermitteln des Referenzsignals und zum Ermitteln der Messsignale, und wobei jeweils ein Messsignal der Messsignale einem Sensorelement der Gruppe von Sensorelementen zugeordnet ist.

Gemäß verschiedener Aspekte kann ein Gittersensorsystem aufweisen: einen Fluidführungsbereich zum Führen eines Fluids; eine Elektrode, die in dem Fluidführungsbereich angeordnet ist, eine Referenzsignalquelle (z.B. die Referenz-Sendeelektrode angeregt von einer Spannungsquelle, welche eine Referenz-Anregungsspannung bereitstellt) zum Erzeugen eines Referenzsignals (z.B. eines Referenzstroms oder einer Referenzspannung) in der Elektrode; einen Referenzsignalempfänger zum Empfangen des Referenzsignals (z.B. als Strom oder Spannung); und eine Signalauswerteeinheit zum Auswerten des empfangenen Referenzsignals, wobei das empfangene Referenzsignal einen Störeinfluss des in dem Fluidführungsbereich strömenden Fluids auf eine elektrische Charakteristik der Elektrode repräsentiert. Es versteht sich, dass ein Referenzsignal in Form einer Spannung einem Strom zugeordnet werden kann und umgekehrt, beispielsweise mittels eines Widerstands.

Gemäß verschiedener Aspekte kann eine Auswertevorrichtung (z.B. Messvorrichtung) aufweisen: eine Eingabeschnittstelle, die eingerichtet ist zum Empfangen von Messdaten und Referenzdaten von einem Gittersensor gemäß einem der Patentansprüche 1 bis 8, wobei der Gittersensor zumindest teilweise von ein oder mehreren Fluiden umströmt werden kann, wobei die Messdaten zumindest eine Eigenschaft der ein oder mehreren Fluide repräsentieren und einen Störeinfluss der ein oder mehreren Fluide auf den Gittersensor aufweisen, und wobei die Referenzdaten den Störeinfluss der ein oder mehreren Fluide auf den Gittersensor repräsentieren; ein oder mehrere Prozessoren, die eingerichtet sind, eine Messwertkorrektur zum Erstellen von korrigierten Messdaten basierend auf den Messdaten und den Referenzdaten durchzuführen, wobei die Messwertkorrektur den Störeinfluss der ein oder mehreren Fluide auf den Gittersensor korrigiert; und eine Ausgabeschnittstelle zum Ausgeben der korrigierten Messdaten, die zumindest eine Eigenschaft der ein oder mehreren Fluide repräsentieren und unabhängig von dem Störeinfluss der ein oder mehreren Fluide auf den Gittersensor sind.

Gemäß verschiedener Aspekte kann ein Computerprogrammprodukt Instruktionen aufweisen, die ein oder mehrere Prozessoren veranlassen, Folgendes auszuführen: Laden eines Datensatzes, der einen Kalibrierwert, eine erste Gruppe von Messwerten und einen ersten Referenzwert aufweist, wobei der Kalibrierwert einen Kalibrier-Störeinfluss von genau einem Fluid von ein oder mehreren Fluiden auf eine Gruppe von Sensoren repräsentiert, wobei der erste Referenzwert einen ersten Störeinfluss auf die Gruppe von Sensoren durch die ein oder mehreren Fluide repräsentiert, wobei jeder Messwert der ersten Gruppe von Messwerten eine Eigenschaft der ein oder mehreren Fluiden und den ersten Störeinfluss auf die Gruppe von Sensoren repräsentiert, und wobei jeder Messwert der ersten Gruppe von Messwerten einem Sensor von einer Gruppe von Sensoren zugeordnet ist; Ermitteln eines Korrekturwerts aus dem Kalibrierwert und dem ersten Referenzwert; und Korrigieren jedes Messwerts der ersten Gruppe von Messwerten mittels des Korrekturwerts. Beispielsweise kann ein Einfluss von lediglich Luft auf die Elektrode als störeinflussfrei verstanden werden, da hierdurch kein substanzieller Stromabfluss aus der Elektrode (z.B. weniger als 0,1% des gesamten Abflusses) verursacht wird. Beispielsweise kann unter dieser Betrachtung der Kalibrierwert störeinflussfrei gemessen werden, sofern die Elektrode lediglich Luft ausgesetzt ist. Je nach Messaufbau können auch andere Bedingungen einen entsprechenden Kalibrierwert als störeinflussfrei definieren, z.B. jeweils eine von mehreren zu messenden Fluiden, welches den geringeren Störeinfluss hat.

Ausführungsformen sind in den Figuren dargestellt und werden im Folgenden näher erläutert.

Es zeigen

| | |
|---|---|
| Figuren 1A bis 1C | jeweils eine schematische Darstellung von ein oder mehreren Gruppen von Sensorelementen eines Gittersensors gemäß verschiedener Aspekte; |
| Figuren 2 bis 3B | schematische Darstellungen verschiedener Gittersensoren gemäß verschiedener Aspekte; |
| Figuren 4 bis 6 | jeweils ein Verfahren zum Korrigieren eines oder mehrerer Messwerte eines Gittersensors gemäß verschiedener Aspekte; |
| Figur 7 | schematische Darstellung verschiedener Elektrodensegmente eines Gittersensors gemäß verschiedener Aspekte; und |
| Figuren 8 und 9 | schematische Darstellungen verschiedener Gittersensoren gemäß verschiedener Aspekte. |

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann.

Gemäß verschiedener Aspekte können Fluide, Anteile eines Fluids (z.B. Phasenanteile und/oder Fluidanteile) und/oder Bauteile als elektrisch leitend (oder kurz als leitend) bezeichnet werden. Als leitend werden Medien bezeichnet, die eine Leitfähigkeit von mehr als 0,1 $\mu$S/cm (z.B. mehr als 1 $\mu$S/cm, 100 $\mu$S/cm, 400 $\mu$S/cm) aufweisen. Als elektrisch hochleitend (oder kurz hochleitend) können elektrisch leitende Medien bezeichnet werden, die eine (elektrische) Leitfähigkeit von mehr als 500 $\mu$S/cm (z.B. mehr als 1000 $\mu$S/cm, 10000 $\mu$S/cm, 50000 $\mu$S/cm) aufweisen.

Gemäß verschiedener Aspekte können ein oder mehrere Fluide durch ein oder mehrere Bauteile hindurch, bzw. an ein oder mehreren Bauteilen entlang bzw. vorbei strömen. Jedes der ein oder mehreren Fluide kann eine Fließgeschwindigkeit aufweisen und als Fluidstrom oder strömendes Fluid bezeichnet werden. Es sei angemerkt, dass mit jedem Fluid auch ein Fluidstrom gemeint sein kann. Ferner sei angemerkt, dass im Folgenden mit "einem Fluid" auch "ein oder mehrere Fluide" (z.B. eine Mischung aus ein oder mehreren Fluiden) gemeint sein können, wenn nicht explizit anders gesagt oder sich dies aus dem Kontext ergibt. Gemäß verschiedener Aspekte kann jedes Fluid von ein oder mehreren Fluiden ein oder mehrere Anteile (z.B. ein oder mehrere Bestandteile, und/oder mehrere Anteile, die in zumindest einer Eigenschaft voneinander unterschiedlich sind (z.B. einer Temperatur, einer Dichte)) aufweisen. Ein Anteil kann auch als Phase bezeichnet werden. Ein Anteil eines Fluids kann beispielsweise ein Aggregatzustand eines Anteils des Fluids sein (z.B. fest, flüssig und/oder gasförmig). Ein Fluid kann eine Flüssigkeit, und/oder ein Gas und/oder ein fluidisierter Feststoff sein. Beispielsweise können ein oder mehrere Fluide ein oder mehrere Flüssigkeiten aufweisen. Beispielsweise können ein oder mehrere Fluide ein oder mehrere Gase aufweisen. Beispielsweise können ein oder mehrere Fluide ein oder mehrere Gase und ein oder mehrere Flüssigkeiten aufweisen. Beispielsweise können ein oder mehrere voneinander verschiedene Fluide zumindest eine voneinander verschiedene Eigenschaft aufweisen. Jedes der ein oder mehrere Fluide kann ein oder mehrere der folgenden Eigenschaften aufweisen: eine Temperatur, ein Druck, eine Viskosität, eine elektrische Eigenschaft (z.B. eine elektrische Leitfähigkeit, eine Impedanz, eine relative Permeabilität, eine elektrische Ladung), eine magnetische Eigenschaft, ein Aggregatzustand, eine Kernladungszahl, eine chemische Zusammensetzung, und/oder eine Geschwindigkeit (z.B. eine Strömungsgeschwindigkeit). Beispielsweise kann das Fluid auch ein oder mehrere Feststoffe, z.B. in Form von Feststoffpartikeln (z.B. mit einem Durchmesser kleiner als 0,5 cm, 0,1 cm oder kleiner als 0,01 cm) aufweisen, sofern die Gesamteigenschaften derartiger Stoffe oder Stoffgemische (z.B. Emulsionen, z.B. Sand, oder ähnliches) einen fluiden Charakter haben.

Beispielsweise kann ein prozentualer Anteil eines Fluids bzw. eines Fluidstroms eine Masse (oder ein Volumen) eines Anteils bezogen auf die gesamte Masse (bzw. das gesamte Volumen) des Fluids sein. Beispielsweise können sich alle prozentualen Anteile zu 100% aufsummieren.

Gemäß verschiedener Aspekte werden Signale prozessiert, z.B. gesendet, empfangen, verarbeitet, verändert etc. Ein Signal, das mittels einer Elektrode (z.B. einer Sendeelektrode) gesendet wird, kann als Sendesignal oder gesendetes Signal bezeichnet werden. Ein Signal, dass mittels einer Elektrode (z.B. einer Empfangselektrode) empfangen wird, kann als Empfangssignal, empfangenes Signal, oder Messsignal bezeichnet werden. Zwischen dem Senden des Signals von einem Signalursprung über die Sendeelektrode und dem Empfangen des Signals an einem Signalzielort, kann das Signal durch ein oder mehrere Wechselwirkungen, z.B. mit den ein oder mehreren Fluiden und/oder mit Bauelementen des Gittersensors, verändert werden, bevor es empfangen werden kann. Ohne eine Wechselwirkung kann das empfangene Signal gleich dem gesendeten Signal sein (d.h. es tritt kein Unterschied auf). Beispielsweise kann die Elektrode drahtförmig (z.B. ein Draht) sein. Beispielsweise kann die Elektrode schwertförmig sein. Beispielsweise kann die Elektrode plattenförmig sein. Beispielsweise kann die Elektrode eine Leiterbahn auf einer Leiterplatte sein. Beispielsweise kann eine Elektrode in Halbeabschnitten gehalten werden (z.B. auf einem Substrat (z.B. einer Leiterplatte)). Beispielsweise kann zwischen zwei (z.B. benachbarten) Halteabschnitten die Elektrode freiliegen. Beispielsweise kann zwischen zwei (z.B. benachbarten) Halteabschnitten die Elektrode abschnittsweise keinen Kontakt zu festem Material (z.B. dem Substrat, z.B. der Leiterplatte) haben. Somit kann ein zu messendes Fluid in einen Bereich der Elektrode gelangen.

Die Wechselwirkungen können zumindest einen Unterschied zwischen dem gesendeten und dem empfangenen Signal erzeugen. Der Unterschied kann beispielsweise zumindest eine Eigenschaft der ein oder mehreren Fluide und/oder von zumindest einem der Bauelemente des Gittersensors repräsentieren. Der Unterschied kann beispielsweise zusätzlich (oder gänzlich) ein oder mehrere Störeinflüsse repräsentieren. Jeder der Störeinflüsse kann beispielsweise den Unterschied vergrößern oder verkleinern. Beispielsweise können sich verschiedene Störeinflüsse der ein oder mehreren Störeinflüsse gegenseitig kompensieren. Störeinflüsse können ungewollt sein und möglicherweise Messergebnisse eines Sensors unbrauchbar machen.

Gemäß verschiedener Aspekte können Referenzelemente verwendet werden, um Störeinflüsse zu ermitteln. Beispielsweise kann ein Referenzelement ein Bauteil sein, das ein in Abhängigkeit von einem Eingangssignal (einem sogenannten Anregungssignal) konstantes und/oder vorbestimmtes bzw. vordefiniertes Ausgangssignal ausgibt. Beispielsweise kann das Referenzelement das Ausgangssignal erzeugen. Beispielsweise kann das Referenzelement ein passives Bauteil sein, das eine bekannte Übertragungsfunktion zwischen einer ersten und einer zweiten Elektrode aufweist. Anschaulich kann durch das Referenzelement das Eingangssignal, das durch eine erste Elektrode am Referenzelement bereitgestellt werden kann, mit einer bekannten Übertragungsfunktion (die beispielsweise zu einer bekannten Veränderung führen kann) als das Ausgangssignal des Referenzelements vom Referenzelement ausgegeben werden, z.B. an eine zweite Elektrode. Es versteht sich, dass das Referenzelement derart gestaltet sein kann, dass das Ausgangssignal gleich dem Eingangssignal ist. Beispielsweise kann das Eingangssignal innerhalb des Referenzelements in einer vorbestimmten Weise verändert werden und mit der vorbestimmten Änderung als Ausgangssignal ausgegeben werden. Durch Störeinflüsse kann das Ausgangssignal des Referenzelements verändert werden und als ein Referenzsignal empfangen werden. Beispielsweise kann das Ausgangssignal ein oder mehrere vorbestimmte bzw. vordefinierte der folgenden Eigenschaften aufweisen: eine Stromstärke, eine Spannung, ein Widerstand, eine Frequenz, eine Wellenlänge, eine Intensität, eine Dauer, eine Temperatur etc. Das vom Referenzelement ausgegebene Signal kann als ein Referenzsignal empfangen werden. Das Referenzsignal kann beispielsweise durch die zuvor beschriebenen Wechselwirkungen verglichen mit dem Ausgangssignal verändert sein. Anschaulich kann das Referenzsignal als das Ausgangssignal unter dem Einfluss der Störeinflüsse verstanden werden. Beispielsweise können mittels eines Vergleichs des Ausgangssignals und des Referenzsignals ein oder mehrere Störeinflüsse abgeschätzt werden. Beispielsweise können mehrere (z.B. voneinander verschiedene) Referenzelemente verwendet werden zum Ermitteln verschiedener Störeinflüsse. Beispielsweise kann ein Referenzsignal, das unter einem vorbestimmten Zustand (z.B. einem Füllzustand) ermittelt wird, als ein Kalibriersignal bezeichnet werden. Beispielsweise können aus einem Referenzsignal ein oder mehrere Referenzwerte abgeleitet werden. Beispielsweise können aus einem Kalibriersignal ein oder mehrere Kalibrierwerte abgeleitet werden.

Gemäß verschiedener Aspekte kann ein Gittersensor ein oder mehrere Sensorelemente aufweisen. Beispielsweise kann ein Sensorelement mit einer ersten Elektrode und einer zweiten Elektrode gekoppelt sein. Beispielsweise kann ein Sendesignal von der ersten Elektrode innerhalb des Sensorelements auf die zweite Elektrode übertragen werden. Ein Sensorelement kann beispielsweise eine kapazitive Kopplung, und/oder eine ohmsche Kopplung zwischen der ersten und zweiten Elektrode bereitstellen. Beispielsweise kann das Sensorelement ein oder mehrere der folgenden Bauteile aufweisen oder daraus bestehen: ein Widerstand, ein Kondensator, eine Spule, ein Temperatursensor, eine Lichtquelle, ein Photodetektor, und/oder ein Drucksensor oder eine Kombination davon. Das Referenzelement kann ein oder mehrere Sensorelemente aufweisen oder sein.

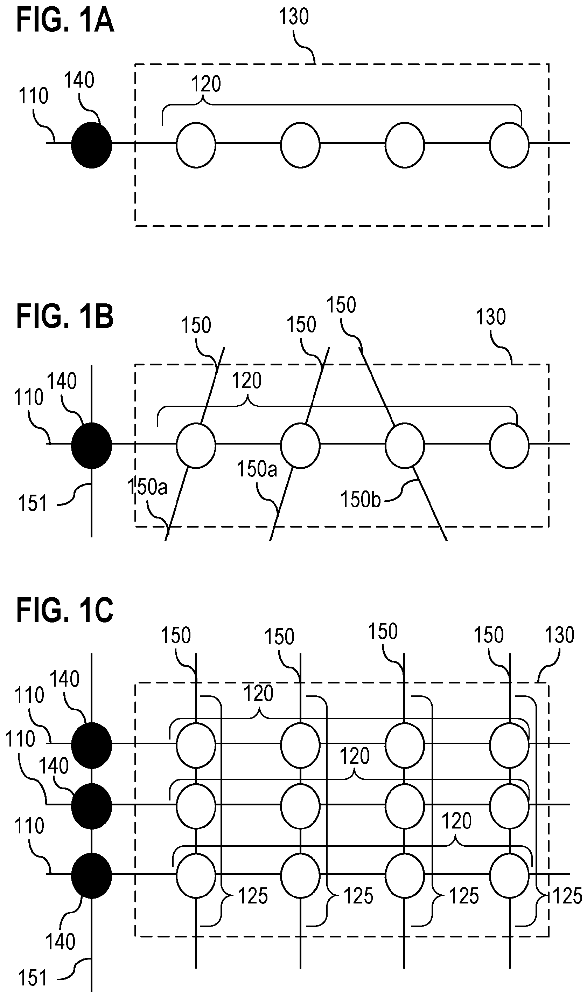

**Fig.1A** ist eine schematische Darstellung einer Gittersensoreinheit eines Gittersensors. Der Gittersensor kann aufweisen: einen Fluidführungsbereich 130, eine Gruppe von Sensorelementen 120, eine Elektrode 110 und ein Referenzelement 140. Der Fluidführungsbereich 130 kann geeignet sein zum Führen eines Fluids bzw. eines Fluidstroms. Beispielsweise kann die Gruppe von Sensorelementen 120 zum Ermitteln von ein oder mehreren Eigenschaften des Fluids (bzw. des Fluidstroms) geeignet sein, wenn das Fluid durch den Fluidführungsbereich 130 geführt wird bzw. strömt.

Die Sensorelemente der Gruppe von Sensorelementen 120 können mit der Elektrode 110 verbunden sein zum Betreiben der Sensorelemente der Gruppe von Sensorelementen 120. Als Betreiben kann ein Auslesen, ein Versorgen (z.B. mit Energie), und/oder das Durchführen einer Messung mittels des jeweiligen Sensorelements verstanden werden. Das Referenzelement 140 kann der Elektrode 110 zugeordnet sein. Beispielsweise kann das Referenzelement 140 eingerichtet sein zum Bereitstellen eines Referenzsignals zum Ermitteln von Korrekturdaten, welches einen Störeinfluss des Fluids auf eine elektrische Charakteristik (z.B. einen Widerstand, eine Impedanz, eine Kapazität, und/oder eine Induktivität) der Elektrode 110 repräsentieren können, wenn das Fluid in dem Fluidführungsbereich 130 geführt wird. Das Referenzelement 140 kann beispielsweise außerhalb des Strömungsbereichs 130 angeordnet sein. Beispielsweise kann das Referenzelement 140 derart eingerichtet sein, dass ein vordefiniertes (bzw. vorbestimmtes und/oder bekanntes) Ausgangssignal, das von dem Referenzelement 140 ausgegeben (z.B. gesendet) und/oder erzeugt wird, innerhalb des Referenzelements 140 nicht durch ein in dem Strömungsbereich strömendes Fluid beeinflusst wird. Anschaulich bedeutet das, dass das vordefinierte Ausgangssignal, das von dem Referenzelement ausgegeben wird, unabhängig von dem in dem Fluidführungsbereich geführten Fluid ist. Beispielsweise kann das Referenzelement 140 mit einer Schutzschicht zumindest teilweise umhüllt sein. Beispielsweise kann die Schutzschicht das Referenzelement vor ein oder mehreren Einflüssen des in dem Strömungsbereich strömenden Fluids abschirmen. Nach der Ausgabe des vordefinierten Ausgangssignals aus dem Referenzelement 140 kann das vordefinierte Ausgangssignal durch die Einflüsse des in dem Strömungsbereich strömenden Fluids verändert werden. Das veränderte Ausgangssignal kann als das Referenzsignal empfangen werden.

**Fig.1B** ist eine schematische Darstellung einer Gittersensoreinheit eines Gittersensors. Im Vergleich zum Gittersensor gemäß Fig.1A weist der Gittersensor gemäß Fig.1B mehrere weitere Elektroden 150 und eine Referenzelektrode 151 auf. Die mehreren weiteren Elektroden 150 können in einer anderen Ebene verglichen zu der Elektrode 110 liegen. Beispielsweise können die Elektrode und die mehreren weiteren Elektroden voneinander elektrisch isoliert werden/sein.

In einer Projektionsansicht des Gittersensors können sich die Elektrode 110 und die mehreren weiteren Elektroden 150 in zumindest einem Punkt schneiden. An dem Schnittpunkt kann beispielsweise ein Sensorelement angeordnet sein. Beispielsweise kann durch den Schnittpunkt auch das Sensorelement gebildet werden. Der Schnittwinkel kann beliebig zwischen 0° und 180° gewählt werden. Im Folgenden werden häufig Projektionen mit Schnittwinkeln von 90° gezeigt. Die mehreren weiteren Elektroden 150 können mehrere erste weitere Elektroden 150a aufweisen, die beispielsweise parallel zueinander angeordnet sein können. Die mehreren weiteren Elektroden 150 können beispielsweise zumindest eine zweite weitere Elektrode 150b aufweisen. Die zweite weitere Elektrode 150b kann beispielsweise nicht parallel zu den Elektroden der ersten Art 150b angeordnet sein. Es versteht sich, dass die weiteren Elektroden 150 im Allgemeinen beliebig zueinander und zu der Elektrode 110 angeordnet sein können. Um eine optimale Funktionsweise des Gittersensors zu ermöglichen, sollten jedoch Elektroden, die sich nicht gegenseitig beeinflussen sollen, voneinander elektrisch abgeschirmt sein, z.B. mittels einer geeigneten Anordnung der Elektroden und/oder durch isolierende Materialien. Es versteht sich, dass die Elektroden über das in dem Strömungsbereich geführte Fluid miteinander elektrisch verbunden sein können.

Das Referenzelement 140 kann mit der Elektrode 110 verbunden sein. Das Referenzelement 140 kann mit einer Referenzelektrode 151 verbunden sein. Die Referenzelektrode 151 kann beispielsweise derart angeordnet sein, dass sie nicht durch ein Fluid im Fluidführungsbereich beeinflusst wird. Beispielsweise kann die Referenzelektrode 151 außerhalb des Fluidführungsbereichs 130 angeordnet sein. Beispielsweise kann die Referenzelektrode 151 derart (zumindest teilweise) umhüllt sein, dass sie vom Fluid nicht beeinflusst wird. Anschaulich kann die Elektrode 110, das Referenzelement 140 und die Referenzelektrode 151 so eingerichtet sein, dass ein Referenzsignal nur durch einen Einfluss des Fluids auf die Elektrode 110 verändert werden kann. Beispielsweise kann die Referenzelektrode 151 eine der mehreren weiteren Elektroden 150 sein. Beispielweise kann die Referenzelektrode 151 innerhalb des Fluidführungsbereichs 130 angeordnet sein.

Jedes Sensorelement der Gruppe von Sensorelementen 120 kann sowohl mit der Elektrode 110 als auch mit einer der mehreren weiteren Elektroden 150 verbunden sein. Anschaulich kann jedes Sensorelement eine Verbindung mit der Elektrode und mit jeweils einer Elektrode der mehreren weiteren Elektroden 150 aufweisen.

Beispielsweise kann die Elektrode 110 eingerichtet sein ein Signal zu senden (d.h. als eine Sendeelektrode eingerichtet sein). Beispielsweise können die Referenzelektrode 151 und/oder die mehreren weiteren Elektroden 150 jeweils eingerichtet sein jeweils ein Signal zu empfangen (d.h. als Empfangselektroden).

Zum Ermitteln eines korrigierten Messsignals kann der Gittersensor beispielsweise eingerichtet sein, ein vorbestimmtes Sendesignal mittels der Elektrode 110 an das Referenzelement 140 zu Senden. Mittels des Referenzelements 140 kann das vorbestimmte Signal als das Referenzsignal an die Referenzelektrode 151 übertragen (anschaulich im Wesentlichen unverändert weitergeleitet werden) werden. Beispielsweise kann das Referenzelement 140 durch das vorbestimmte Signal ein Ausgangssignal des Referenzelements 140 an die Referenzelektrode 151 übertragen. Das Ausgangssignal kann durch den Einfluss eines in dem Fluidbereich geführten Fluids verändert werden (z.B. verstärkt oder geschwächt). Das durch die Referenzelektrode 151 empfangene Signal kann das durch den Einfluss des in dem Fluidbereich 130 geführten Fluids veränderte Ausgangssignal sein.

Beispielsweise kann die Elektrode 110 eingerichtet sein, ein Signal zu senden (d.h. ein Sendesignal). Die mehreren weiteren Elektroden 150 können derart eingerichtet sein, dass immer nur eine der mehreren weiteren Elektroden 150 das Sendesignal über das jeweilige Sensorelement empfangen kann. Die mehreren weiteren Elektroden 150 können derart eingerichtet sein, dass alle der ein der mehreren weiteren Elektroden 150 das Sendesignal über das jeweilige Sensorelement empfangen können, z.B. zeitgleich oder innerhalb von 1 s nachdem eine erste der mehreren weiteren Elektroden 150 das Sendesignal empfangen hat. Beispielsweise können die mehreren weiteren Elektroden derart eingerichtet sein, dass, nachdem eine erste Elektrode ein erstes Messsignal empfangen hat, eine zweite Elektrode ein zweites Messsignal empfangen kann. Beispielsweise kann ein solches Wechseln der jeweiligen empfangenden Elektroden durchgeführt werden, bis eine vorbestimmte Anzahl oder eine vorbestimmte Menge an Elektroden jeweils ein Messsignal empfangen hat.

Beispielsweise kann die Elektrode 110 eingerichtet sein ein Signal zu empfangen (d.h. als eine Empfangselektrode eingerichtet sein). Beispielsweise können die Referenzelektrode 151 und die mehreren weiteren Elektroden 150 jeweils eingerichtet sein jeweils ein Signal zu senden (d.h. als Sendeelektroden).

Zum Ermitteln eines korrigierten Messsignals kann der Gittersensor beispielsweise eingerichtet sein, ein Referenz-Sendesignal mittels der Referenzelektrode 151 an das Referenzelement zu Senden. Innerhalb des Referenzelements 140 kann das Signal als das Referenzsignal an die Elektrode 110 übertragen werden. Beispielsweise können die ersten weiteren Elektroden 150a eingerichtet sein ein erstes Sendesignal der ein oder mehreren Sendesignale zu senden. Beispielsweise kann die zweite Elektrode eingerichtet sein, ein zweites Sendesignal zu senden. Beispielsweise können das erste und das zweite Sendesignal in allen Signaleigenschaften gleich sein. Beispielsweise können das erste und das zweite Sendesignal sich in zumindest einer Signaleigenschaft unterscheiden. Eine Signaleigenschaft kann beispielsweise sein eine Dauer, eine Intensität, eine Wellenlänge, eine Frequenz, eine An-Zeit, und/oder ein Intensitätsverlauf.

Beispielsweise kann eine der ersten weiteren Elektroden 150a das erste Sendesignal senden. Nach einem vorbestimmten ersten Zeitintervall kann eine zweite der ersten weiteren Elektroden 150a das erste Sendesignal senden. Nach einem vorbestimmten zweiten Zeitintervall kann die zweite weitere Elektrode 150b das zweite Sendesignal senden. Anschaulich können das erste und zweite Zeitintervall als erste bzw. zweite Pausen bezeichnet werden. Beispielsweise können das erste und das zweite Zeitintervall gleich lang oder verschieden lang voneinander sein. Beispielsweise kann man eine Abfolge von mehreren Signalen und/oder mehreren Pausen als eine Signalabfolge bezeichnen. Beispielsweise kann eine Anzahl von Signalabfolgen pro Sekunde als eine Signalabfolgen-Frequenz bezeichnet werden. Die Elektrode 110 kann eingerichtet sein, ein jeweiliges gesendetes Signal als ein Messsignal über ein jeweiliges Sensorelement zu empfangen. Ein solches Vorgehen kann analog fortgesetzt werden, bis eine vorbestimmte Anzahl der mehreren weiteren Elektroden 150 ein Signal gesendet hat.

Sowohl wenn die Elektrode als eine Empfangselektrode als auch als eine Sendeelektrode eingerichtet ist, können die jeweiligen ermittelten Messwerte mittels des Referenzsignals korrigiert werden. Es versteht sich, dass ein Ermitteln eines Messsignals auch abwechselnd mit dem Ermitteln des Referenzwerts stattfinden kann. Natürlich ist es auch möglich mehrere oder alle Messwerte zu ermitteln und davor oder danach den Referenzwert zu ermitteln.

Wie aus den vorherigen Ausführungsbeispielen deutlich wird, kann das Referenzelement sowohl an Sendeelektroden als auch an Empfangselektroden verwendet werden. Außerdem ist es möglich mehrere Elektroden über verschiedene Sensorelemente miteinander zu koppeln. Die Sensorelemente sind vorzugsweise in einer Matrixanordnung angeordnet, d.h. mit gleichmäßigen Abständen zueinander. Es ist jedoch auch möglich, die Sensorelemente in einer beliebigen Ordnung anzuordnen. Da eine Matrixanordnung für eine systematische Auswertung geeigneter scheint, wird eine spezifische Ausgestaltung im Folgenden gezeigt:

**Fig.1C** ist eine schematische Darstellung mehrerer Gittersensoreinheiten eines Gittersensors gemäß verschiedener Aspekte, wobei jede Gittersensoreinheit einer Elektrode 110 zugeordnet werden kann. Jede Gittersensoreinheit kann zumindest ein Referenzelement 140 aufweisen. Das Referenzelement 140 der jeweiligen Gittersensoreinheit kann der jeweiligen Elektrode 110 der Gittersensoreinheit zugeordnet sein. Die Referenzelemente 140 der mehreren Gittersensoreinheiten können mit einer Referenzelektrode 151 verbunden werden/sein. Es versteht sich, dass jedes Referenzelement 140 mit einer Referenzelektrode 151 verbunden sein kann, die keine Verbindung zu den Referenzelementen 140 der anderen Gittersensoreinheiten aufweist. Jede Gittersensoreinheit des Gittersensors kann eine Gruppe von Sensorelementen 120 aufweisen. Jede Gruppe von Sensorelementen 120 kann einer jeweiligen Elektrode 110 des Gittersensors zugeordnet werden. Der Gittersensor kann mehrere weitere Elektroden 150 aufweisen. Die mehreren weiteren Elektroden 150 können jeweils ein Sensorelement von mehreren Gittersensorelementen miteinander verbinden. Jede der mehreren weiteren Elektroden 150 kann somit jeweils eine weitere Gruppe von Sensorelementen 125 bilden. Anschaulich kann jedes Sensorelement 120 des Gittersensors einer Gruppe von Sensorelementen 120 und einer weiteren Gruppe von Sensorelementen 125 zugeordnet werden. Beispielsweise können einem Sensorelement so genau eine Sendeelektrode und eine Empfangselektrode zugeordnet werden. Die Zuordnung zu der Gruppe von Sensorelementen 120 über die (z.B. gemeinsame) Elektrode 110 kann auch als eine Zuordnung zu einer Gittersensoreinheit verstanden werden.

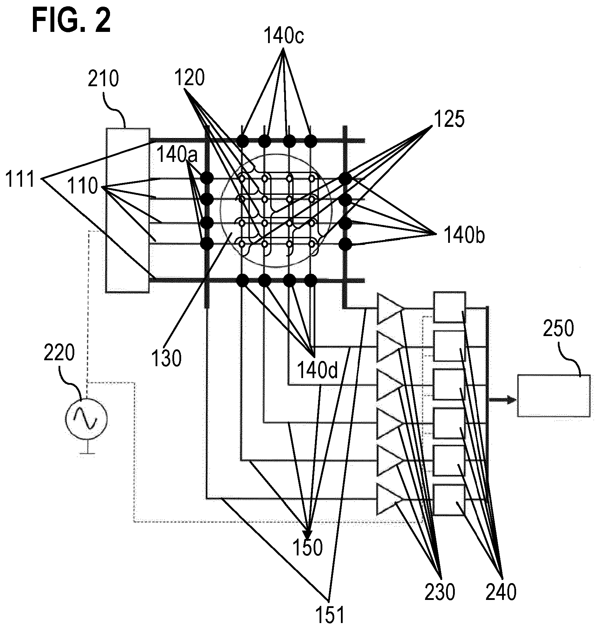

**Fig.2** ist eine erweiterte schematische Darstellung des Gittersensors gemäß Fig.1C. Der Gittersensor kann mehrere Gittersensoreinheiten aufweisen. Jede Gittersensoreinheit kann eine Elektrode 110, eine Gruppe von Sensorelementen 120, ein oder mehrere Referenzelektroden und ein oder mehrere Referenzelemente 140 aufweisen. Ferner kann der Gittersensor eine Mehrzahl von weiteren Elektroden 150 aufweisen, wobei jede der mehreren weiteren Elektroden 150 jeweils ein Sensorelement von voneinander verschiedenen Gittersensoreinheiten der mehreren Gittersensoreinheiten miteinander verbinden kann. Sensoreinheiten, die mittels einer der weiteren Elektroden 150 miteinander verbunden werden, können einer Gruppe von weiteren Sensoreinheiten 125 zugeordnet werden. Aufgrund der Mehrzahl von weiteren Elektroden 150 können somit mehrere Gruppen von weiteren Sensoreinheiten 125 gebildet werden. Beispielsweise kann jede der vier beispielhaft dargestellten Elektroden 110 jeweils mit einem ersten Referenzelement 140a und einem zweiten Referenzelement 140b verbunden sein. Das jeweilige erste und das zweite Referenzelement 140a, 140b können mit jeweils voneinander unabhängigen Referenzempfangs-Elektroden 151 von mehreren Referenzempfangs-Elektroden 151 gekoppelt sein. Beispielsweise kann jede der vier beispielhaft dargestellten weiteren Elektroden 150 der mehreren weiteren Elektroden mit jeweils einem dritten Referenzelement 140c und einem vierten Referenzelement 140d verbunden werden/sein. Das dritte und das vierte Referenzelement können mit jeweils einer voneinander unabhängigen Referenzsende-Elektrode 111 von mehreren Referenzsende-Elektroden 111 gekoppelt werden/sein.

Beispielsweise kann jede der mehreren Gittersensoreinheiten, z.B. mittels der jeweiligen Elektroden 110 und der jeweiligen Referenzsende-Elektroden 111, jeweils mit einem Sendeschaltkreis 210 gekoppelt sein. Der Sendeschaltkreis 210 kann eingerichtet sein, ein oder mehrere Signale über die jeweiligen Elektroden 110 und/oder die jeweiligen Referenzsende-Elektroden 111 zu senden. Beispielsweise kann der Gittersensor mit einer Spannungsquelle 220, z.B. einer Wechselspannungsquelle, verbunden sein oder diese aufweisen.

Beispielsweise können die mehreren Gittersensoreinheiten, z.B. mittels der weiteren Elektroden 150 und der Referenzempfangs-Elektroden 151, jeweils mit einem Empfangsschaltkreis gekoppelt werden/sein. Der Empfangsschaltkreis kann beispielsweise ein oder mehrere Signalverstärker 230 zum Verstärken eines empfangenen (z.B. einlaufenden) Signals aufweisen. Der Empfangsschaltkreis kann beispielsweise ein oder mehrere Log-Amp-Schaltkreise 240 aufweisen zum Umwandeln eines jeweiligen empfangenen Signals in ein logarithmisch skaliertes Signal. Der Empfangsschaltkreis kann eingerichtet sein, ein oder mehrere Signale mittels der mehreren weiteren Elektroden 150 und/oder der mehreren Referenzempfangs-Elektroden 151 zu empfangen. Der Empfangsschaltkreis kann eingerichtet sein, empfangene Signale an eine Ermittlungsvorrichtung 250 weiterzuleiten.

Die Ermittlungsvorrichtung 250 kann beispielsweise eingerichtet sein, empfangene Messsignale zu speichern. Beispielsweise kann der Gittersensor eine Berechnungsvorrichtung aufweisen, die eingerichtet ist unter Verwendung von Referenzsignalen die Messsignale zu korrigieren.

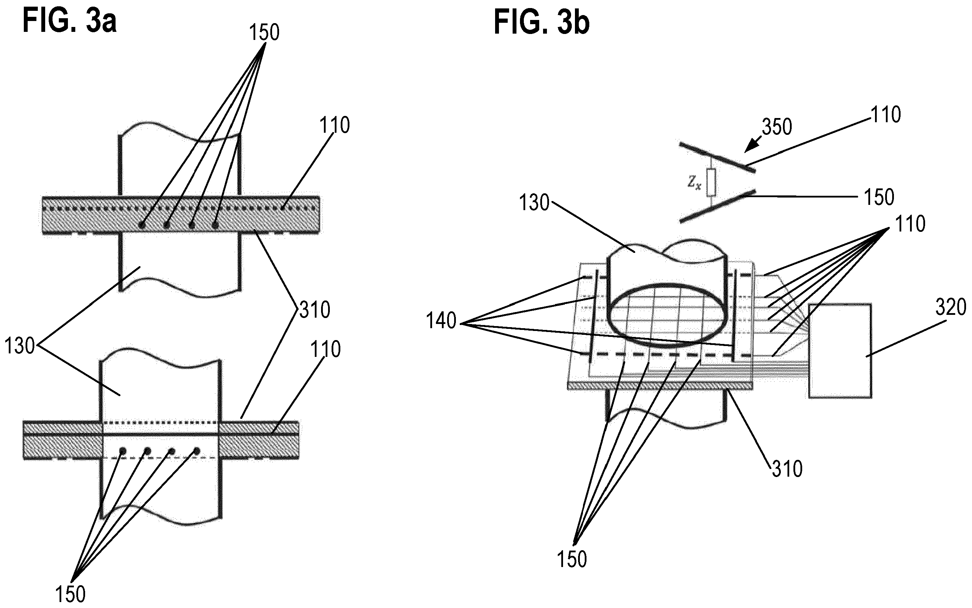

**Fig.3A** zeigt zwei schematische Schnittansichten eines Gittersensors. Beispielsweise kann in Fig.3A erkannt werden, dass die Elektrode 110 und die weiteren Elektroden 150 in unterschiedlichen Ebenen angeordnet sein können. Die obere Ansicht von Fig.3A zeigt eine erste Schnittansicht entlang einer Leiterplatte 310, in der beispielsweise ein oder mehrere elektronische Schaltkreise ausgestaltet sein können. Die untere Ansicht, zeigt eine zweite Schnittansicht durch den Fluidführungsbereich 130.

**Fig.3B** zeigt einen dreidimensionalen schematischen Messaufbau eines Gittersensors und ein Ersatzschaltbild 350. Der Gittersensor ist schematisch mit einem Schnitt durch einen Fluidführungsbereich 130 (z.B. in Form eines Rohrs) dargestellt. Das Ersatzschaltbild 350 veranschaulicht eine Schaltung, die beispielsweise durch ein einzelnes Sensorelement realisiert wird. Zwischen einer Elektrode 110 und einer weiteren Elektrode 150 kann innerhalb des Sensorelements eine Verbindung hergestellt werden, z.B. über das Fluid, das eine Impedanz $Z_x$ aufweisen kann. Die Impedanz $Z_x$ kann jedoch auch von einem realen Bauteil zwischen der Elektrode 110 und der weiteren Elektrode 150 realisiert werden.

Der Gittersensor kann ferner eine Steuervorrichtung 320 aufweisen, die eingerichtet ist, eine Signalabfolge über die Elektroden 110 zu senden und mittels der weiteren Elektroden 150 zu empfangen.

Fehler in den Messsignalen bzw. Messwerten, die in Form von Energieverlusten detektiert werden können, können beispielsweise mittels des folgenden Verfahrens korrigiert werden.

Energieverluste von Gittersensor-Elektroden können mit Hilfe von Referenzwerten (z.B. Referenzimpedanzen, Referenzkapazitäten) abgeschätzt werden, die mittels Referenzelementen ermittelt werden können, die sich außerhalb des Erfassungsbereichs des Gittersensors befinden. Jede Elektrode kann mit einem Referenzelement verbunden sein/werden. Ein Referenzelement kann beispielsweise als Kupferleiterbahn in einem Leiterplatten-Layout gebildet werden. Beispielsweise kann ein Referenzelement ein diskretes Bauteil wie ein Widerstand, ein Kondensator, eine Induktivität, ein Temperatursensor, und/oder ein Halbleiter, oder Kombinationen aus den Vorgenannten sein.

Eine erste Messung (z.B. eine erste Kalibriermessung) kann bei einem vollständig mit Luft gefüllten Sensor durchgeführt werden. Das Ausgangssignal des Referenzelements kann gespeichert werden. Für den Fall eines geringen Energieverlustes (z.B. weniger als 5%, 2%, 1%, 0,5%, 0,1% oder weniger als 0,01 %) von ein oder mehreren Elektroden (z.B. der Sendeelektroden und/oder der Empfangselektroden) kann ein empfangenes Referenzsignal gleich dem Ausgangssignal des Referenzelements sein. In einem solchen Fall (geringer Energieverlust) würde das Referenzsignal repräsentieren, dass die ein oder mehreren Elektroden (nahezu) keinem Störeinfluss (z.B., wenn der Fluidführungsbereich vollständig mit Luft oder einem ähnlichen (d.h. mit einer relativen elektrischen Dielektrizitätskonstante zwischen 0,1 und 5) Gas oder Gasgemisch gefüllt ist, oder darin Vakuum herrscht) unterliegen. Alle Kalibriersignale, inklusive dem Referenzsignal, das keinen Störeinfluss repräsentiert, können gespeichert werden. Mit einem geeigneten Algorithmus können die Energieverluste der ein oder mehreren Elektroden unter Berücksichtigung der Kalibriersignale (z.B. des Referenzsignals oder z.B. der Referenzsignale) geschätzt und korrigiert werden. Dies geschieht beispielsweise, indem die Referenzsignale, z.B. eines Störeinfluss-freien Sensors, mit neuen Referenzsignalen, die einen Sensor mit einem Störeinfluss repräsentieren können, in Beziehung gesetzt werden können. Die neuen Referenzsignale können während einer bestimmten Messung ermittelt werden. Somit kann beispielsweise ein Verfahren bereitgestellt werden, das für eine zeitaufgelöste und/oder bildaufgelöste (d.h. Frame für Frame) Messung (z.B. Ermittlung von Störeinflüssen) verwendet werden kann.

Beispielsweise kann ein Messwert einer Messwertkorrektur mit linearer Demodulation unterzogen werden, wie im Folgenden beschrieben.

Die Matrix der gemessenen Ausgangsspannungen $U_o^x$ ist ein Maß, das die Ausgangsspannung jedes Kreuzungspunktes des Fluidströmungsquerschnitts des Fluids x repräsentieren kann. Sie kann dargestellt werden als

$$U_o^{mess,x}(i,j,k) = \frac{U_o^{ideal,x}(i,j,k)}{\xi(i,k)}$$

wobei $U_o^{ideal,x}$ eine ideale Messung innerhalb des Fluids *x*, d.h. ohne einen Verlust, ist und $\zeta$ ein oder mehrere Verluste jeder Elektrode i repräsentiert. Die Indizes i und j repräsentieren die Elektroden (z.B. Empfangselektroden und Senderelektroden), und k ist eine laufende Nummer einer Messung. Beispielsweise kann k für eine korrekte Zuordnung der verschiedenen Messungen verwendet werden (z.B. als Mess-Identifizierung). Beispielsweise kann die Nummer k verwendet werden, um eine zeitaufgelöstes und/oder bildaufgelöstes (d.h. Frame für Frame) korrigiertes Messergebnis auszugeben verwendet werden. Unter der Annahme, dass die Verluste der Elektroden vernachlässigbar sind, wenn der Sensor vollständig mit Luft gefüllt ist, kann die ideale Ausgangsspannungen $U_o^{ideal,Luft}$ näherungsweise mittels einer Messung der Ausgangsspannung in einem Kalibriermedium (z.B. in Luft kann $\zeta \approx 1$ sein) $U_o^{mess,Luft}$ folgt abgeschätzt werden:

Basierend auf dieser Eigenschaft können die Signale der externen Referenzen für jeden Empfänger i vor einem bestimmten Experiment gesammelt werden. Beispielsweise wenn keine Störungen auftreten (z.B., wenn der Sensor luftgefüllt ist). Dann können gespeicherte Daten $U_o^{meas,x}(i,0,k)$ von Referenzelementen bei j = 0 verwendet werden, um die Energieverluste $\xi(i,k)$ für jedes weitere Experiment wie folgt abzuschätzen (z.B. in Echtzeit):

$$\zeta(i,k) \approx \tilde{\zeta}(i,k) = \frac{U^{mess,Luft}(i,0,k)}{U^{mess,x}(i,0,k)},$$

wobei $\tilde{\zeta}$ eine Abschätzung eines realen Verlustes $\zeta$ ist und der Index j = 0 ein oder mehrere Referenzelemente kennzeichnet (z.B. Kreuzungspunkte der Elektroden außerhalb des Fluidführungsbereichs des Gittersensors). Da die Referenzelemente eine konstante Impedanz aufweisen können, sind sie nur von den Verlusten betroffen, die durch die elektrisch leitfähigen Anteile des Fluidstroms in dem Fluidführungsbereichs verursacht werden. Die korrigierte gemessene Ausgangsspannungen $U^x_{korrigiert}$ kann somit gegeben sein durch:

$$U^{mess,x}_{korrigiert}(i,j,k) = U^{mess,x}(i,j,k)\,\tilde{\zeta}(i,k).$$

Die Messwertkorrektur mit linearer Demodulation kann auf eine Messwertkorrektur mit Log-Amp Demodulation übertragen werden.

Beispielsweise kann die Matrix der logarithmischen gemessenen Ausgangsspannungen $U^x_{log}$ für einen idealen (d.h. störungsfreien) Zustand unter Berücksichtigung der obigen Beziehungen wie folgt berechnet werden:

$$U_{o_{\log}}^{ideal,x}(i,j,k) = v_a . \log\left(\frac{U_o^{ideal,x}(i,j,k)}{v_b}\right)$$

wobei $v_a$ und $v_b$ Konstanten der Log-Amp-Schaltung sind.

Unter der Annahme, dass die Ausgangsspannungen durch Störungen verändert werden können, ergibt sich für diese:

$$U_{o_{\log}}^{mess,x}(i,j,k) = v_a . \log\left(\frac{U_o^{ideal,x}(i,j,k)}{\xi(i,k)} \cdot \frac{1}{v_b}\right) = v_a . \log\left(\frac{U_o^{ideal,x}(i,j,k)}{v_b}\right) - v_a . \log(\xi(i,k)).$$

Wie bei der linearen Demodulation kann angenommen werden, dass ein Verlust durch eine Störung in einem luftgefüllten Gittersensor vernachlässigbar ist, wodurch sich ergibt, dass

$$v_a . \log\left(\frac{U_o^{mess,Luft}(i,j,k)}{v_b}\right) - 0 \approx v_a . \log\left(\frac{U_o^{ideal,Luft}(i,j,k)}{v_b}\right).$$

Der Verlust durch die Störung kann mittels einer externen Referenz berechnet werden:

$$v_a . \log\left(\tilde{\xi}(i,k)\right) = \log\left(U_o^{mess,Luft}(i,0,k)\right) - \log\left(U_o^{mess,x}(i,0,k)\right),$$

wobei j=0 die Position der Referenz repräsentiert.

Somit kann die gesamte Messwertkorrektur der Ausgangsspannungen $U_{o\_\log_{korrigiert}}^{mess,x}(i,j,k)$ innerhalb des Fluids $x$ an den Positionen $i,j$ und der Messung $k$ gegeben sein durch:

$$U_{o\_\log_{korrigiert}}^{mess,x}(i,j,k) \approx U_{o_{\log}}^{mess,x}(i,j,k) + v_a . \log\left(\tilde{\xi}(i,k)\right).$$

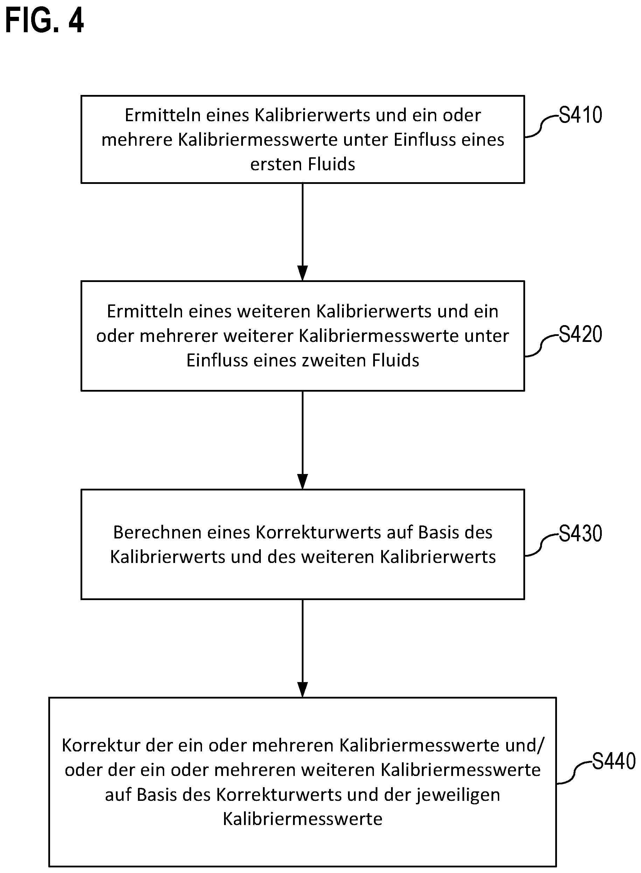

In den Figuren 4 bis 6 werden verschiedene exemplarische Ausgestaltungen der Verfahren zur Messwertkorrektur beschrieben.

**Fig.4** zeigt schematisch ein Verfahren zum Kalibrieren eines Gittersensors.

In einem ersten Schritt kann ein Kalibrierwert sowie ein oder mehrere Kalibriermesswerte unter einem Einfluss eines ersten Fluids ermittelt werden (S410). Beispielswese können der Kalibrierwert und die Kalibriermesswerte einen Zustand des Gittersensors repräsentieren, in dem ein erstes Fluid den Fluidführungsbereich des Gittersensors gänzlich ausfüllt. Das erste Fluid kann beispielsweise ein Gas oder eine Flüssigkeit sein.

Dann kann ein weiterer Kalibrierwert sowie ein oder mehrere weitere Kalibrier-Messwerte unter Einfluss eines zweiten Fluids ermittelt werden (S420). Beispielsweise können der weitere Kalibrierwert und die ein oder mehreren weiteren Kalibrier-Messwerte einen Zustand des Gittersensors repräsentieren, in dem ein zweites Fluid den Fluidführungsbereich des Gittersensors gänzlich ausfüllt. Das zweite Fluid kann beispielsweise eine höhere relative Permeabilität aufweisen als das erste Fluid. Beispielsweise kann das zweite Fluid eine Flüssigkeit sein.

Dann kann ein Korrekturwert unter Verwendung des Kalibrierwerts und des weiteren Kalibrierwerts berechnet werden (S430).

In einem letzten Korrekturschritt können die ein oder mehreren Kalibriermesswerte und/oder die ein oder mehreren weiteren Kalibriermesswerte korrigiert werden (S440). Auf Basis der ein oder mehreren Kalibriermesswerte und des Korrekturwerts können ein oder mehrere korrigierte Kalibriermesswerte ermittelt (z.B. berechnet) werden. Auf Basis der ein oder mehreren weiteren Kalibriermesswerte und des Korrekturwerts können ein oder mehrere weitere korrigierte Kalibriermesswerte ermittelt (z.B. berechnet) werden.

Die ein oder mehreren korrigierten Kalibriermesswerte bzw. die ein oder mehreren weiteren korrigierten Kalibriermesswerte können mit gängigen Verfahren weiter ausgewertet werden, um elektrische Eigenschaften des zu untersuchenden Fluids zu ermitteln.

Beispielsweise kann mittels des beschriebenen Verfahrens eine Größenordnung eines Störeinflusses abgeschätzt werden. Beispielsweise kann das beschriebene Verfahren verwendet werden, um Messwerte zu skalieren.

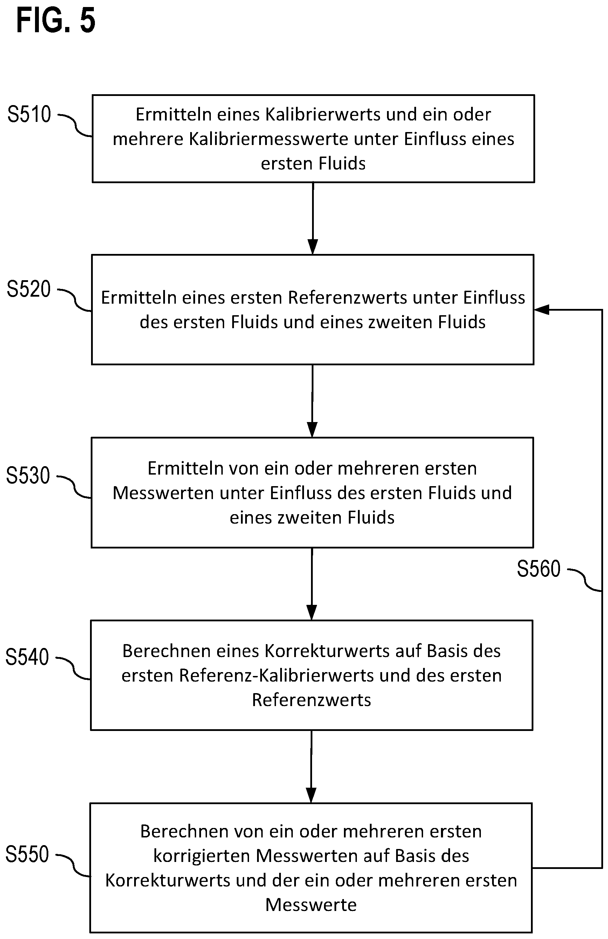

**Fig.5** zeigt schematisch ein Verfahren zum Korrigieren von ein oder mehreren Messwerten, z.B. von einem Referenzelement und einer Messung von mehreren Sensorelementen, die mit diesem Referenzelement verbunden sind.

Es können ein Kalibrierwert und ein oder mehrere erste Kalibriermesswerte unter Einfluss eines ersten Fluids ermittelt werden (S510). Beispielswese können der Kalibrierwert und die Kalibriermesswerte einen Zustand des Gittersensors repräsentieren, in dem ein erstes Fluid den Fluidführungsbereich des Gittersensors gänzlich ausfüllt.

Im Anschluss kann ein erster Referenzwert unter einem Einfluss des ersten Fluids und eines zweiten Fluids ermittelt werden (S520). Beispielsweise kann der erste Referenzwert einen Zustand des Gittersensors repräsentieren, in dem sich zumindest ein zweites Fluid zusätzlich zu dem ersten Fluid in dem Fluidführungsbereich des Gittersensors befindet. Dieser Schritt kann beispielsweise den Beginn einer Messung darstellen.

Dann können ein oder mehrere erste Messwerte unter Einfluss des ersten Fluids und eines zweiten Fluids ermittelt werden (S530). Beispielsweise können die ein oder mehreren ersten Messwerte einen Zustand des Gittersensors repräsentieren, in dem sich zumindest ein zweites Fluid zusätzlich zu dem ersten Fluid in dem Fluidführungsbereich des Gittersensors befindet. Dieser Schritt kann beispielsweise eine Messung des Fluids in dem Fluidführungsbereich repräsentieren.

Ausgehend von den ermittelten Werten kann ein Korrekturwert auf Basis des Kalibrierwerts und des ersten Referenzwerts berechnet werden (S540).

Im letzten Schritt können ein oder mehrere erste korrigierte Messwerte unter Verwendung des Korrekturwerts und der ein oder mehreren ersten Messwerte berechnet werden (S550).

Die korrigierten Messwerte können beispielsweise mit gängigen Verfahren weiter ausgewertet werden, um Eigenschaften des Fluids zu ermitteln. Ist die Messung noch nicht abgeschlossen, kann das Verfahren ab der Ermittlung des ersten Referenzwerts wiederholt werden (S560).

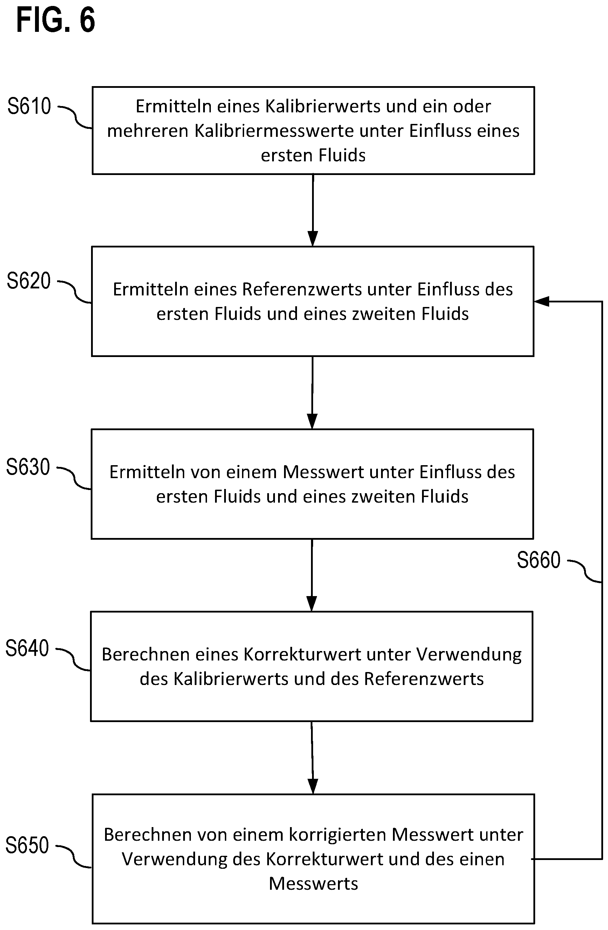

**Fig.6** zeigt schematisch ein weiteres Verfahren zum Korrigieren von einem Messwert, ähnlich dem aus Fig.5. Im Unterschied zu dem Verfahren gemäß Fig.5 wird in diesem Verfahren zwischen jeder Ermittlung eines Messwerts ein neuer Referenzwert ermittelt. Damit kann, wenn beispielsweise eine sehr schnelle Messelektronik vorhanden ist, eine höhere Genauigkeit erzielt werden. Beispielsweise können der Messwert und der Referenzwert zeitgleich, oder innerhalb von weniger als 50 ms (z.B. weniger als 10 ms, 1 ms oder weniger als 0,1 ms) ermittelt werden. Beispielsweise können nur die Sendeelektroden sequenziell geschaltet werden. Somit können sich immer neue Referenz und Messwerte ergeben, die in einer gemeinsamen Auswertung ausgewertet werden können.

Beispielsweise kann ein Energieverlust an der Sendelektrode auftreten, wenn das Material einer Elektrode ein schlechter Leiter ist (z.B. Edelstahl) und eine der im Strömungsbereich vorhandenen Phasen hochleitfähig ist. In dem Falle kommt es zu einem hohen Stromfluss auf der Sendelektrode, welcher zunächst einen nicht vernachlässigbaren Spannungsabfall über die Elektrode bewirkt.

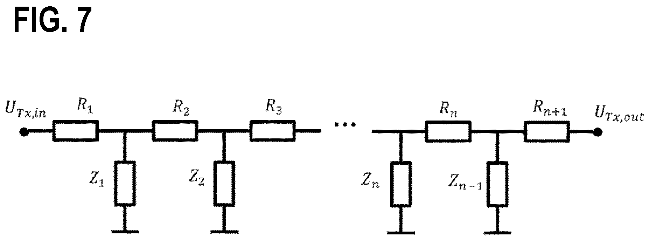

Der Energieverlust an der Sendelektrode kann geschätzt werden, indem das Messsystem als Ersatzschaltbild dargestellt wird, wie in Fig.7 dargestellt.

In **Fig.7** repräsentiert $R_x$ *(x=1, 2, 3, ..., n+1)* den Widerstand eines Elektrodensegments, der durch

$$R_x = \frac{L_x}{\sigma A_{cr}}$$

berechnet wird, wobei $L_x$ die Länge eines Segments der Sendelektrode ist, $\sigma$ die elektrische Leitfähigkeit der Elektrode ist und $A_{cr}$ die Querschnittsfläche der Elektrode ist. $Z_x$ ist die Impedanz des Fluids, die dem Kreuzungspunkt x zugeordnet ist, was wiederum theoretisch geschätzt werden kann als

$$Z_x = \frac{1}{\frac{1}{\sigma_x} + j\omega\varepsilon_o\varepsilon_x},$$

wobei $\sigma_x$ und $\varepsilon_x$ die elektrische Leitfähigkeit bzw. die relative Permittivität des Fluids sind, $\omega$ die Kreisfrequenz und $j = \sqrt{-1}$.

$U_{Tx,in}$ und $U_{Tx,out}$ sind die Referenzspannungen. Sie können durch zwei Ansätze erhalten werden.

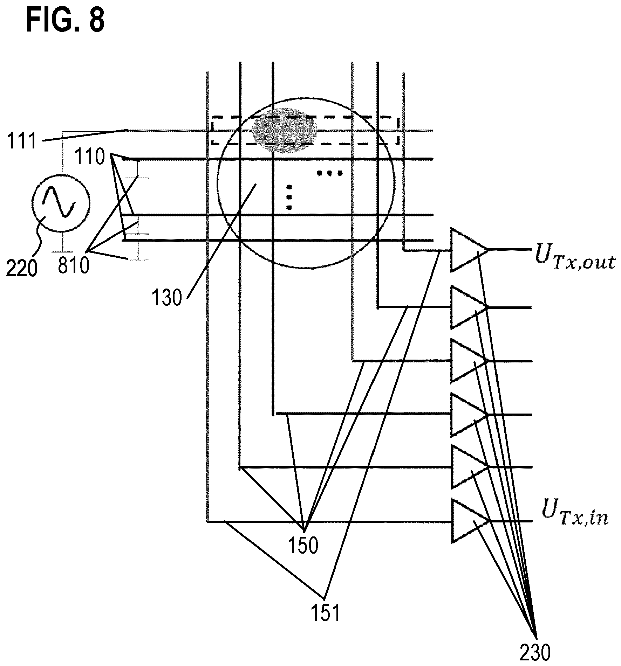

Im ersten Ansatz werden $U_{Tx,in}$ und $U_{Tx,out}$ analog zu dem Verfahren zur Korrektur der Energieverluste der Empfängerdrähte aus externen Referenzen 810 erhalten (Fig.8).

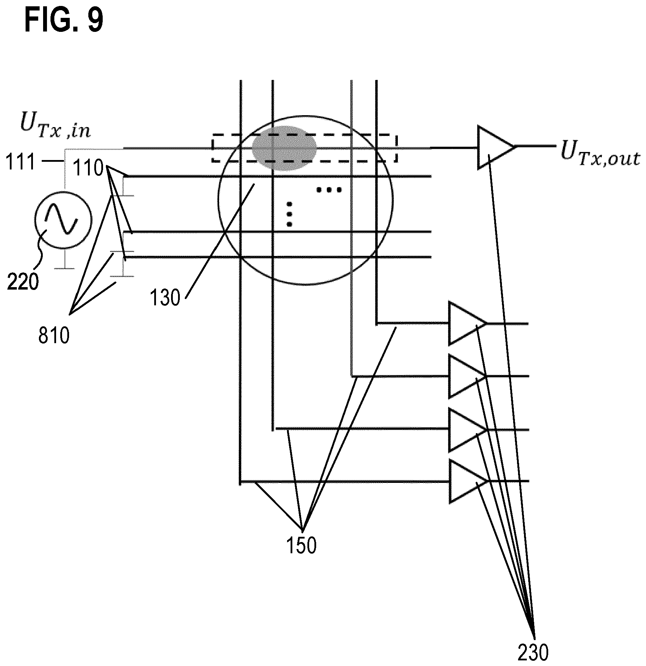

Im zweiten Ansatz ist $U_{Tx,in}$ gleich der Spannungsquelle (die a priori bekannt ist), und $U_{Tx,out}$ wird einzeln von einem Operationsverstärker gemessen (Fig.9).

Die Energieverluste entlang der Elektrode werden basierend auf dem ohmschen Gesetz und dem Kirchhoff'schen Gesetz formuliert:

$$\frac{U_{Tx,1}}{Z_1} + \frac{U_{Tx,1} - U_{Tx,in}}{R_1} + \frac{U_{Tx,1} - U_{Tx,2}}{R_2} = 0$$

$$\frac{U_{Tx,2}}{Z_2} + \frac{U_{Tx,2} - U_{Tx,1}}{R_2} + \frac{U_{Tx,2} - U_{Tx,3}}{R_3} = 0$$

$$\vdots$$

$$\frac{U_{Tx,n}}{Z_n} + \frac{U_{Tx,n} - U_{Tx,n-1}}{R_n} + \frac{U_{Tx,2} - U_{Tx,out}}{R_{n+1}} = 0$$

Der Einfachheit halber kann es in Matrixform wie folgt dargestellt werden

$$\begin{bmatrix} p_1 & -q_2 & 0 & 0 & \dots & 0 & 0 & 0 \\ -q_1 & p_2 & -q_3 & 0 & & 0 & 0 & 0 \\ & \vdots & & & \ddots & & \vdots & \\ 0 & 0 & 0 & 0 & & -q_{n-2} & p_{n-1} & -q_n \\ 0 & 0 & 0 & 0 & \dots & 0 & -q_{n-1} & p_n \end{bmatrix} \begin{bmatrix} U_{Tx,1} \\ U_{Tx,2} \\ \vdots \\ U_{Tx,n-1} \\ U_{Tx,n} \end{bmatrix} = \begin{bmatrix} q_1 . U_{Tx,in} \\ 0 \\ \vdots \\ 0 \\ q_n . U_{Tx,out} \end{bmatrix}$$

wobei,

$$p_x = \left( \frac{1}{Z_x} + \frac{1}{R_x} + \frac{1}{R_{x+1}} \right), \qquad q_x = \frac{1}{R_x}.$$

Die Matrixform der Energieverluste entlang der Elektrode zeigt ein lineares System vom Typ $Ax$ = b, wobei der Energieverlust durch Lösen des linearen Systems als $x = A^{-1}b$ erhalten wird. Die Matrixform der Energieverluste entlang der Elektrode hat eine einzige Lösung und kann direkt verwendet werden, um das Anregungssignal des jeweiligen Kreuzungspunkts zu korrigieren.

Vorteil vom zweiten Ansatz gegenüber dem ersten Ansatz ist, dass es nicht zu einer Summation der Ströme an der Referenzelektrode kommt. Unter der Annahme, dass alle nicht angeregten Sendedrähte komplett auf Masse liegen und somit keinerlei Beitrag zum gemessenen Signal an der Referenzelektrode liefern, wäre der erste Ansatz ausreichend. Jedoch kommt es bei hohen Leitfähigkeiten und langen Drähten auch zu einem nicht vernachlässigbaren Spannungseintrag auf nicht-angeregte Sendedrähte, welcher mit dem zweiten Ansatz jedoch korrekt ermittelt werden kann. Allerdings ist der zweite Ansatz mit einem erhöhten schaltungstechnischen Aufwand verbunden.

Gemäß verschiedener Aspekte wird ein Gittersensor bereitgestellt, der geeignet ist zum Ermitteln von Phasenverteilungen in mehrphasigen Fluidströmungen. Insbesondere in Fluidströmungen mit elektrisch (hoch)leitfähigen Phasenanteilen, z.B. zur Untersuchung von Mehrphasenströmungen in der Erdölindustrie. Bei herkömmlichen kapazitiven Gittersensoren können bei Vorhandensein elektrisch leitfähiger Phasen Messabweichungen beispielsweise in Form von Nichtlinearitäten auftreten. Dadurch können Signalverluste an den Empfangselektroden infolge von einer Energiedissipation hervorgerufen werden. Die Signalverluste können abhängig von einer jeweiligen Benetzung der einzelnen Elektroden und/oder Sensorelemente mit der leitfähigen Phase sein und somit während des Messverlaufs variieren.

Die zuvor beschriebenen beispielhaften Ausgestaltungen von Gittersensoren und die zuvor beschriebenen Verfahren können es ermöglichen, die Signalverluste zu quantifizieren und somit zu korrigieren. Somit kann eine Genauigkeit und eine Aussagekraft einer Messung mittels des Gittersensors verbessert werden. Insbesondere kann eine Quantifizierung der Phasenanteile auch bei einem Vorhandensein von elektrisch (hoch)leitfähigen Phasen ermöglicht sein.

**Patentansprüche**

1. Gittersensor aufweisend:

   einen Fluidführungsbereich (130);
   mehrere Gittersensoreinheiten, wobei jede der mehreren Gittersensoreinheiten aufweist:

      eine Gruppe von Sensorelementen (120) eingerichtet zum Erzeugen von Messsignalen, welche ein oder mehrere Eigenschaften eines in dem Fluidführungsbereich (130) geführten Fluids repräsentieren;

eine Elektrode (110), wobei die Sensorelemente der Gruppe von Sensorelementen (120) mit der Elektrode (110) verbunden sind zum Betreiben der Sensorelemente der Gruppe von Sensorelementen (120);
**dadurch gekennzeichnet, dass** jede der mehreren Gittersensoreinheiten aufweist:
ein Referenzelement (140), welches der Elektrode (110) zugeordnet ist, mit der Elektrode (110) verbunden ist, und eingerichtet ist, ein Referenzsignal, welches einen Störeinfluss des in dem Fluidführungsbereich (130) geführten Fluids auf eine elektrische Charakteristik der Elektrode repräsentiert, bereitzustellen.

2.  Gittersensor gemäß Anspruch 1,
    wobei die ein oder mehreren Eigenschaften des Fluids ein oder mehrere der folgenden Eigenschaften aufweisen können: eine elektrische Leitfähigkeit, und/oder eine Temperatur, und/oder ein Druck.

3.  Gittersensor gemäß Anspruch 1 oder 2,
    wobei die Sensorelemente der Gruppe von Sensorelementen (120) ein oder mehrere Temperatursensoren, und/oder ein oder mehrere Spannungssensoren, und/oder ein oder mehrere Drucksensoren, und/oder ein oder mehrere Stromstärkesensoren, und/oder ein oder mehrere Induktivitätssensoren, und/oder ein oder mehrere Kapazitäts-Sensoren, und/oder ein oder mehrere Magnetfeldstärke-Sensoren, und/oder ein oder mehrere Lichtstärke-Sensoren aufweisen.

4.  Gittersensor gemäß einem der Ansprüche 1 bis 3,
    wobei das Referenzsignal ein oder mehrere der folgenden Werte repräsentiert: eine Referenztemperatur, und/oder eine Referenzspannung, und/oder ein Referenzdruck, und/oder eine Referenzstromstärke, und/oder eine Referenzinduktivität, und/oder eine Referenzkapazität, und/oder eine Referenzmagnetfeldstärke, und/oder eine Referenzlichtstärke, und/oder einen Referenzwiderstand.

5.  Gittersensor gemäß einem der Ansprüche 1 bis 4,

    wobei das Referenzelement (140) derart angeordnet und/oder eingerichtet ist, dass ein vordefiniertes Ausgangssignal von dem Referenzelement (140) ausgegeben wird,
    wobei das vordefinierte Ausgangssignal unabhängig von einem in dem Fluidführungsbereich (130) geführten Fluid ist,
    und wobei das Referenzsignal das durch den Störeinfluss des in dem Fluidführungsbereich (130) geführten Fluids auf eine elektrische Charakteristik der Elektrode veränderte vordefinierte Ausgangssignal ist.

6.  Gittersensor gemäß Anspruch 5,
    wobei das Referenzelement (140) außerhalb des Fluidführungsbereichs (130) angeordnet ist zum Vermeiden eines Einflusses des in dem Fluidführungsbereich (130) geführten Fluids auf das von dem Referenzelement (140) ausgegebene vordefinierte Ausgangssignal.

7.  Gittersensor gemäß einem der Ansprüche 1 bis 6,
    wobei das Referenzelement (140) mittels einer Abschirmung von einem in dem Fluidführungsbereich (130) geführten Fluid abgeschirmt ist.

8.  Gittersensor gemäß einem der Ansprüche 1 bis 7,

    wobei der Gittersensor derart eingerichtet ist, dass das Referenzsignal einem vordefinierten Ausgangssignal des Referenzelements (140) entspricht, wenn kein Störeinfluss des Fluids auf die elektrische Charakteristik der Elektrode (110) vorliegt, und
    dass das Referenzsignal einer Überlagerung des vordefinierten Ausgangssignals des Referenzelements (110) mit ein oder mehreren Störsignalen entspricht, wenn ein oder mehrere Störeinflüsse auf die elektrische Charakteristik der Elektrode (110) vorliegen.

9.  Gittersensorsystem aufweisend,

    einen Gittersensor gemäß einem der Ansprüche 1 bis 8,
    eine Ermittlungsvorrichtung, die eingerichtet ist zum Ermitteln des Referenzsignals und zum Ermitteln der Messsignale, und
    wobei jeweils ein Messsignal der Messsignale einem Sensorelement der Gruppe von Sensorelementen (120) zugeordnet ist.

**10.** Gittersensorsystem gemäß Anspruch 9,
wobei die Ermittlungsvorrichtung eingerichtet ist, in einer Kalibriermessung einen Kalibrierwert zu ermitteln basierend auf dem Referenzsignal, wobei der Kalibrierwert einen Zustand des Gittersensors repräsentiert, in dem ein erstes Fluid den Fluidführungsbereich (130) des Gittersensors gänzlich ausfüllt.

**11.** Gittersensorsystem gemäß Anspruch 10,

wobei die Ermittlungsvorrichtung eingerichtet ist, in einer ersten Messung, einen ersten Referenzwert basierend auf dem Referenzsignal und erste Messwerte basierend auf den Messsignalen zu ermitteln, wobei der erste Referenzwert und die ersten Messwerte einen Zustand des Gittersensors repräsentieren, in dem sich zumindest ein zweites Fluid zusätzlich zu dem ersten Fluid in dem Fluidführungsbereich (130) des Gittersensors befindet, und
wobei sich das erste Fluid und das zweite Fluid in zumindest einer der ein oder mehreren Eigenschaften voneinander um mehr als 1% unterscheiden.

**12.** Gittersensorsystem gemäß Anspruch 10,

wobei die Ermittlungsvorrichtung eingerichtet ist, in einer ersten Messung, einen ersten Referenzwert basierend auf dem Referenzsignal und erste Messwerte basierend auf den Messsignalen zu ermitteln, wobei der erste Referenzwert und die ersten Messwerte einen Zustand des Gittersensors repräsentieren, in dem ein zweites Fluid den Fluidführungsbereich (130) des Gittersensors gänzlich ausfüllt,
wobei sich das erste Fluid und das zweite Fluid in zumindest einer der ein oder mehreren Eigenschaften voneinander um mehr als 1% unterscheiden.

**13.** Gittersensorsystem gemäß einem der Ansprüche 11 bis 12 ferner aufweisend:
eine Berechnungsvorrichtung, die eingerichtet ist zum Berechnen eines Korrekturwerts zum Korrigieren des Störeinflusses basierend auf dem Kalibrierwert und dem ersten Referenzwert, und zum Berechnen von korrigierten ersten Messwerten basierend auf den ersten Messwerten und dem Korrekturwert.

**14.** Verfahren zum Auswerten von Messdaten, das Verfahren aufweisend:

Empfangen von Messdaten und Referenzdaten von einem Gittersensor gemäß einem der Ansprüche 1 bis 8, wobei der Gittersensor zumindest teilweise von ein oder mehreren Fluiden umströmt wurde,

wobei die Messdaten zumindest eine Eigenschaft der ein oder mehreren Fluide repräsentieren und einen Störeinfluss der ein oder mehreren Fluide auf den Gittersensor aufweisen, und
wobei die Referenzdaten den Störeinfluss der ein oder mehreren Fluide auf den Gittersensor repräsentieren;

Durchführen einer Messwertkorrektur zum Erstellen von korrigierten Messdaten basierend auf den Messdaten und den Referenzdaten,
wobei die Messwertkorrektur den Störeinfluss der ein oder mehreren Fluide auf den Gittersensor korrigiert; und
Ausgeben der korrigierten Messdaten, die zumindest eine Eigenschaft der ein oder mehreren Fluide repräsentieren und unabhängig von dem Störeinfluss der ein oder mehreren Fluide auf den Gittersensor sind.

**15.** Computerprogrammprodukt, das Instruktionen aufweist, die ein oder mehrere Prozessoren veranlassen das Verfahre gemäß Anspruch 14 auszuführen.

**Claims**

**1.** A grid sensor comprising:

a fluid guiding area (130);
multiple grid sensor units, wherein each of the multiple grid sensor units comprises:

a group of sensor elements (120) configured to generate measurement signals representing one or more properties of a fluid guided in the fluid guiding area (130);
an electrode (110), wherein the sensor elements of the group of sensor elements (120) are connected to the electrode (110) for operating the sensor elements of the group of sensor elements (120);

**characterized in that** each of the multiple grid sensor units comprises:
a reference element (140) associated with the electrode (110), connected to the electrode (110) and configured to provide a reference signal representing a disturbance influence of the fluid guided in the fluid guiding area (130) on an electrical characteristic of the electrode.

2. The grid sensor according to claim 1,
wherein the one or more properties of the fluid may comprise one or more of the following properties: an electrical conductivity, and/or a temperature, and/or a pressure.

3. The grid sensor according to claim 1 or 2,
wherein the sensor elements of the group of sensor elements (120) comprise one or more temperature sensors, and/or one or more voltage sensors, and/or one or more pressure sensors, and/or one or more current sensors, and/or one or more inductance sensors, and/or one or more capacitance sensors, and/or one or more magnetic field strength sensors, and/or one or more light intensity sensors.

4. The grid sensor according to any one of claims 1 to 3,
wherein the reference signal represents one or more of the following values: a reference temperature, and/or a reference voltage, and/or a reference pressure, and/or a reference current strength, and/or a reference inductance, and/or a reference capacitance, and/or a reference magnetic field strength, and/or a reference luminous intensity, and/or a reference resistance.

5. The grid sensor according to any one of claims 1 to 4,

wherein the reference element (140) is arranged and/or configured such that a predefined output signal is output by the reference element (140),
wherein the predefined output signal is independent of a fluid guided in the fluid guiding area (130),
and wherein the reference signal is the predefined output signal as modified due to the interference of the fluid guided in the fluid guiding area (130) on an electrical characteristic of the electrode.

6. The grid sensor according to claim 5,
wherein the reference element (140) is arranged outside the fluid guiding region (130) for avoiding an influence of the fluid guided in the fluid guiding region (130) on the predefined output signal output by the reference element (140).

7. The grid sensor according to any one of claims 1 to 6,
wherein the reference element (140) is shielded from a fluid guided in the fluid guiding area (130) by a shield.

8. The grid sensor according to any one of claims 1 to 7,

wherein the grid sensor is configured such that the reference signal corresponds to a predefined output signal of the reference element (140) if there is no interference of the fluid on the electrical characteristic of the electrode (110), and
that the reference signal corresponds to a superposition of the predefined output signal of the reference element (110) with one or more interference signals if one or more interference influences on the electrical characteristics of the electrode (110) are present.

9. A grid sensor system,

a grid sensor according to any one of claims 1 to 8,
a determination device configured to determine the reference signal and to determine the measurement signals, and
wherein a measurement signal of the measurement signals is associated with a sensor element of the group of sensor elements (120), respectively.

10. The grid sensor system according to claim 9,
wherein the determination device is configured to determine a calibration value in a calibration measurement based on the reference signal, wherein the calibration value represents a state of the grid sensor in which a first fluid completely fills the fluid guiding area (130) of the grid sensor.

11. The grid sensor system according to claim 10,

wherein the determination device is configured to determine, in a first measurement, a first reference value based on the reference signal and first measurement values based on the measurement signals, wherein the first reference value and the first measurement values represent a state of the grid sensor in which at least a second fluid in addition to the first fluid is present in the fluid guiding region (130) of the grid sensor, and
wherein the first fluid and the second fluid differ from each other in at least one of the one or more properties by more than 1%.

12. The grid sensor system according to claim 10,

wherein the determination device is configured to determine, in a first measurement, a first reference value based on the reference signal and first measurement values based on the measurement signals, wherein the first reference value and the first measurement values represent a state of the grid sensor in which a second fluid completely fills the fluid guiding area (130) of the grid sensor,
wherein the first fluid and the second fluid differ from each other in at least one of the one or more properties by more than 1%.

13. The grid sensor system according to any one of claims 11 to 12, further comprising:
a calculating device configured to calculate a correction value for correcting the disturbance influence based on the calibration value and the first reference value, and to calculate corrected first measurement values based on the first measurement values and the correction value.

14. A method for evaluating measurement data, the method comprising:

receiving measurement data and reference data from a grid sensor according to any one of claims 1 to 8, wherein the grid sensor has been at least partially flowed around by one or more fluids,

wherein the measurement data represent at least one property of the one or more fluids and exhibits an interference influence of the one or more fluids on the grid sensor, and
wherein the reference data represent the interference of the one or more fluids on the grid sensor;
performing a measurement value correction to create corrected measurement data based on the measurement data and the reference data,
wherein the measurement value correction corrects the interference of the one or more fluids on the grid sensor; and
outputting the corrected measurement data representing at least one property of the one or more fluids and independent of the interference of the one or more fluids on the grid sensor.

15. A computer program product comprising instructions for causing one or more processors to perform the method of claim 14.

**Revendications**

1. Capteur à grille, comprenant :

une zone de guidage de fluide (130) ;
plusieurs unités capteurs à grille, chacune desdites plusieurs unités capteurs à grille comprenant :

un groupe d'éléments capteurs (120) configurés pour générer des signaux de mesure représentant une ou plusieurs propriétés d'un fluide guidé dans la zone de guidage de fluide (130) ;
une électrode (110), les éléments capteurs du groupe d'éléments capteurs (120) étant reliés à l'électrode (110) pour faire fonctionner les éléments capteurs du groupe d'éléments capteurs (120) ;

**caractérisé en ce que** chacune des plusieurs unités capteurs à grille comprend :
un élément de référence (140) associé à l'électrode (110), connecté à l'électrode (110) et configuré pour fournir un signal de référence représentant une influence perturbatrice du fluide guidé dans la zone de guidage de fluide (130) sur une caractéristique électrique de l'électrode.

2. Capteur à grille selon la revendication 1,
   dans lequel lesdites une ou plusieurs propriétés du fluide peuvent comprendre une ou plusieurs des propriétés suivantes : une conductivité électrique, et/ou une température, et/ou une pression.

3. Capteur à grille selon la revendication 1 ou 2,
   dans lequel les éléments capteurs du groupe d'éléments capteurs (120) comprennent un ou plusieurs capteurs de température, et/ou un ou plusieurs capteurs de tension, et/ou un ou plusieurs capteurs de pression, et/ou un ou plusieurs capteurs d'intensité de courant, et/ou un ou plusieurs capteurs d'inductance, et/ou un ou plusieurs capteurs de capacité, et/ou un ou plusieurs capteurs d'intensité de champ magnétique, et/ou un ou plusieurs capteurs d'intensité lumineuse.

4. Capteur à grille selon l'une quelconque des revendications 1 à 3,
   dans lequel le signal de référence représente une ou plusieurs des valeurs suivantes : une température de référence, et/ou une tension de référence, et/ou une pression de référence, et/ou une intensité de courant de référence, et/ou une inductance de référence, et/ou une capacité de référence, et/ou une intensité de champ magnétique de référence, et/ou une intensité lumineuse de référence, et/ou une résistance de référence.

5. Capteur à grille selon l'une quelconque des revendications 1 à 4,

   dans lequel l'élément de référence (140) est disposé et/ou configuré de telle sorte qu'un signal de sortie prédéfini est émis par l'élément de référence (140),
   dans lequel le signal de sortie prédéfini est indépendant d'un fluide guidé dans la zone de guidage de fluide (130), et dans lequel le signal de référence est le signal de sortie prédéfini modifié en raison de l'influence perturbatrice du fluide guidé dans la zone de guidage de fluide (130) sur une caractéristique électrique de l'électrode.

6. Capteur à grille selon la revendication 5,
   dans lequel l'élément de référence (140) est disposé à l'extérieur de la zone de guidage de fluide (130) pour éviter une influence du fluide guidé dans la zone de guidage de fluide (130) sur le signal de sortie prédéfini émis par l'élément de référence (140).

7. Capteur à grille selon l'une quelconque des revendications 1 à 6,
   dans lequel l'élément de référence (140) est blindé par un blindage contre un fluide guidé dans la zone de guidage de fluide (130).

8. Capteur à grille selon l'une quelconque des revendications 1 à 7,

   dans lequel le capteur à grille est configuré de telle sorte que le signal de référence correspond à un signal de sortie prédéfini de l'élément de référence (140) s'il n'y a pas d'influence perturbatrice du fluide sur la caractéristique électrique de l'électrode (110), et
   que le signal de référence correspond à une superposition du signal de sortie prédéfini de l'élément de référence (110) avec un ou plusieurs signaux de perturbation si une ou plusieurs influences perturbatrices sur les caractéristiques électriques de l'électrode (110) sont présentes.

9. Système de capteur à grille, comprenant :

   un capteur à grille selon l'une quelconque des revendications 1 à 8,
   un dispositif de détermination configuré pour déterminer le signal de référence et pour déterminer les signaux de mesure, et
   dans lequel un signal de mesure des signaux de mesure est associé respectivement à un élément capteur du groupe d'éléments capteurs (120).

10. Système de capteur à grille selon la revendication 9,
    dans lequel le dispositif de détermination est configuré pour déterminer une valeur d'étalonnage dans une mesure d'étalonnage sur la base du signal de référence, la valeur d'étalonnage représentant un état du capteur à grille dans lequel un premier fluide remplit complètement la zone de guidage de fluide (130) du capteur à grille.

**11.** Système de capteur à grille selon la revendication 10,

dans lequel le dispositif de détermination est configuré pour déterminer, dans une première mesure, une première valeur de référence sur la base du signal de référence et des premières valeurs de mesure sur la base des signaux de mesure, la première valeur de référence et les premières valeurs de mesure représentant un état du capteur à grille dans lequel au moins un deuxième fluide en plus du premier fluide est présent dans la zone de guidage de fluide (130) du capteur à grille, et
dans lequel le premier fluide et le deuxième fluide diffèrent l'un de l'autre dans au moins une desdites une ou plusieurs propriétés de plus de 1 **%.**

**12.** Système de capteur à grille selon la revendication 10,

dans lequel le dispositif de détermination est configuré pour déterminer, dans une première mesure, une première valeur de référence sur la base du signal de référence et des premières valeurs de mesure sur la base des signaux de mesure, dans lequel la première valeur de référence et les premières valeurs de mesure représentent un état du capteur à grille dans lequel un deuxième fluide remplit complètement la zone de guidage de fluide (130) du capteur à grille,
dans lequel le premier fluide et le deuxième fluide diffèrent l'un de l'autre dans au moins l'une desdites une ou plusieurs propriétés de plus de 1 %.

**13.** Système de capteur à grille selon l'une quelconque des revendications 11 à 12, comprenant en outre :
un dispositif de calcul configuré pour calculer une valeur de correction pour corriger l'influence perturbatrice sur la base de la valeur d'étalonnage et de la première valeur de référence, et pour calculer des premières valeurs de mesure corrigées sur la base des premières valeurs de mesure et de la valeur de correction.

**14.** Procédé d'évaluation de données de mesure, le procédé comprenant :

la réception de données de mesure et de données de référence provenant d'un capteur à grille selon l'une quelconque des revendications 1 à 8, où le capteur à grille a été au moins partiellement contourné par un ou plusieurs fluides,

où les données de mesure représentent au moins une propriété desdits un ou plusieurs fluides et présentent une influence perturbatrice desdits un ou plusieurs fluides sur le capteur à grille, et
où les données de référence représentent l'influence perturbatrice desdits un ou plusieurs fluides sur le capteur à grille ;

l'exécution d'une correction de valeurs de mesure afin de créer des données de mesure corrigées sur la base des données de mesure et des données de référence,
où la correction de valeurs de mesure corrige l'influence perturbatrice desdits un ou plusieurs fluides sur le capteur à grille ; et
l'émission des données de mesure corrigées représentant au moins une propriété desdits un ou plusieurs fluides et indépendantes de l'influence perturbatrice desdits un ou plusieurs fluides sur le capteur à grille.

**15.** Produit de programme informatique comprenant des instructions qui amènent un ou plusieurs processeurs à exécuter le procédé selon la revendication 14.

## FIG. 1A

## FIG. 1B

## FIG. 1C

# FIG. 2

FIG. 3b

FIG. 3a

# FIG. 4

Ermitteln eines Kalibrierwerts und ein oder mehrere Kalibriermesswerte unter Einfluss eines ersten Fluids ⎯S410

Ermitteln eines weiteren Kalibrierwerts und ein oder mehrerer weiterer Kalibriermesswerte unter Einfluss eines zweiten Fluids ⎯S420

Berechnen eines Korrekturwerts auf Basis des Kalibrierwerts und des weiteren Kalibrierwerts ⎯S430

Korrektur der ein oder mehreren Kalibriermesswerte und/ oder der ein oder mehreren weiteren Kalibriermesswerte auf Basis des Korrekturwerts und der jeweiligen Kalibriermesswerte ⎯S440

# FIG. 5

S510 — Ermitteln eines Kalibrierwerts und ein oder mehrere Kalibriermesswerte unter Einfluss eines ersten Fluids

S520 — Ermitteln eines ersten Referenzwerts unter Einfluss des ersten Fluids und eines zweiten Fluids

S530 — Ermitteln von ein oder mehreren ersten Messwerten unter Einfluss des ersten Fluids und eines zweiten Fluids

S560

S540 — Berechnen eines Korrekturwerts auf Basis des ersten Referenz-Kalibrierwerts und des ersten Referenzwerts

S550 — Berechnen von ein oder mehreren ersten korrigierten Messwerten auf Basis des Korrekturwerts und der ein oder mehreren ersten Messwerte

# FIG. 6

S610 — Ermitteln eines Kalibrierwerts und ein oder mehreren Kalibriermesswerte unter Einfluss eines ersten Fluids

S620 — Ermitteln eines Referenzwerts unter Einfluss des ersten Fluids und eines zweiten Fluids

S630 — Ermitteln von einem Messwert unter Einfluss des ersten Fluids und eines zweiten Fluids

S660 —

S640 — Berechnen eines Korrekturwert unter Verwendung des Kalibrierwerts und des Referenzwerts

S650 — Berechnen von einem korrigierten Messwert unter Verwendung des Korrekturwert und des einen Messwerts

# FIG. 7

# FIG. 8

# FIG. 9

$U_{Tx,in}$

111 — 110

220

810

130

$U_{Tx,out}$

150

230

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013203437

- WO 2021053177 A